(19)

Europäisches
Patentamt
European
Patent Office
Office européen
des brevets

(11) **EP 2 117 160 A1**

(12) **EUROPEAN PATENT APPLICATION**
published in accordance with Art. 153(4) EPC

(43) Date of publication:
**11.11.2009 Bulletin 2009/46**

(51) Int Cl.:
***H04L 9/32*** *(2006.01)*

(21) Application number: **07860565.6**

(22) Date of filing: **26.12.2007**

(86) International application number:
**PCT/JP2007/075370**

(87) International publication number:
**WO 2008/081970 (10.07.2008 Gazette 2008/28)**

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **28.12.2006 JP 2006356233**

(71) Applicant: **N-Crypt Lab., Inc.
Mie 512-8044 (JP)**

(72) Inventor: **NAKAMURA, Takatoshi
Yokkaichi-shi, Mie 512-8044 (JP)**

(74) Representative: **Skone James, Robert Edmund
Gill Jennings & Every LLP
Broadgate House
7 Eldon Street
London EC2M 7LH (GB)**

(54) **AUTHENTICATION SYSTEM**

(57)     In order to reduce a possibility of an unauthorized access by a user device after the user device has been authenticated and to improve the level of communication security, in an authentication system (1), solutions to be used to judge the validity of a user device (12) are generated in the user device (12) and an authentication device (11) by using environmental information unique to each of the user device (12). According to the authentication system (1), it is possible to prevent a third person who does not know the environmental information unique to each of the user device (12) from masquerading as a user, and to improve the level of communication security.

FIG. 9

**Description**

Technical Field

The present invention relates to an authentication system including a user device and an authentication device which receives, from the user device, a solution that is a pseudorandom number sequentially generated in the user device and judges the validity of the user device by using the received solution.

Background of the Invention

In general, services that use communications, such as Internet banking services provided by banks, are offered when multiple user devices serving as client terminals access an authentication device serving as a server terminal through the Internet. In such online services, since data whose content is desirably prevented from being known by a third person is sent and received(The data to be sent is referred to as "transmission-object data" in this application), authentication techniques for judging the validity of each of the user devices are used in order to prevent an unauthorized access.

[Patent Document 1] JP 2006-253746 A
[Patent Document 2] JP 2006-253745 A

For example, according to the inventions disclosed in above-mentioned Patent Documents and made by the inventor of this application, authentication is performed as follows: solution generating means for sequentially generating a solution that is a pseudorandom number is stored in advance in each of the authentication device and the user device; when the authentication device is accessed by the user device, the authentication device receives a solution generated in the user device and collates the received solution with a solution generated by the solution generating means of the authentication device to judge whether the solutions match; then, when the solutions match, it is judged that the user device is valid. Note that the solution generating means of the user device is the same as the solution generating means of the authentication device, and those two solution generating means sequentially generate the same solutions in the same order.

According to the authentication techniques, only an authorized user device which has the same solution generating means as that of the authentication device is judged to be an authorized user device, and then, transmission and reception of transmission-object data are started.

However, in a case where once the user device is judged to be an authorized user device, there is a possibility that, while the transmission and reception of transmission-object data are being performed, the transmission-object data is accessed from another device by a third person who masquerades as an authorized user.

Objects of the present invention are to reduce a possibility of such an unauthorized access to be made after authentication and to improve the level of communication security.

Disclosure of the Invention

In order to achieve the objects, the inventor of this application proposes the following authentication system.

An authentication system according to this application includes: a user device; and an authentication device for judging whether the user device is valid.

This user device includes: user solution generating means for sequentially generating a solution that is a pseudorandom number; solution transmission means for sending the solution generated by the user solution generating means to the authentication device; and transmission and reception means for performing transmission and reception of transmission-object data with the authentication device when the authentication device judges that the user device is valid, and the user solution generating means generates the solution by using environmental information unique to each of the user device.

Further, the authentication device includes: authentication solution generating means for sequentially generating a solution identical to the solution generated in the user device, in the same order as in the user device; judgement means for judging whether a user device is valid by using a solution received from the user device and the solution generated by the authentication solution generating means; and transmission and reception means for performing transmission and reception of transmission-object data with the user device when the judgement means judges that the user device is valid, the authentication solution generating means generates the solution by using environmental information unique to each of the user device and registered in advance in the authentication device, and the judgement means performs the judgement multiple times by using solutions sequentially generated, while the transmission and reception of the transmission-object data are being performed with the user device.

In this authentication system, while the transmission and reception of the transmission-object data are being performed with the user device, the judgement is performed multiple times by using solutions sequentially generated. In other words, in this authentication system, even in a case where once the user device is judged to be an authorized user device, the validity of the user device is judged many times by performing the judgement multiple times while transmission and reception of transmission-object data are being performed. Thus, according to this authentication system, it is possible to reduce a possibility of an unauthorized access to be made after authentication and to improve the level of communication security. Further, the validity of the user device is judged by using solutions sequentially generated anew, in other words, by using a different solution each time, so the level of communication security can be further improved.

Further, in this authentication system, since solutions to be used to judge the validity of the user device are generated by the user solution generating means and the authentication solution generating means by using environmental information unique to each of the user device, it is possible to prevent a third person who does not know the environmental information unique to each of the user device from masquerading as a user, and to further improve the level of communication security. Note that the environmental information unique to each of the user device is registered in advance in the authentication device.

Further, the inventor of this application proposes the following authentication system.

Specifically, an authentication system according to this application includes: at least two user devices; and an authentication device for judging whether each of the user devices is valid.

Each of the user devices includes: a first user solution generating means and a second user solution generating means each for sequentially generating a solution that is a pseudorandom number, solution transmission means for sending the solution generated by the first user solution generating means or the second user solution generating means to the authentication device; and transmission and reception means for performing transmission and reception of transmission-object data with the authentication device when the authentication device judges that the user device is valid, the first user solution generating means is unique to each of the user devices and generates the solution by using environmental information unique to each of the user device, and the second user solution generating means is common to predetermined user devices (some of user devices) and generates the solution by using environmental information common to the predetermined user devices.

Further, the authentication device includes: a number of first authentication solution generating means, the number being the same as that of the user devices, each for sequentially generating a solution identical to the solution generated by the first user solution generating means of a corresponding user device, in the same order as in the first user solution generating means; a second authentication solution generating means for sequentially generating a solution identical to the solution generated by the second user solution generating means of the user device, in the same order as in the second user solution generating means; a first judgement means for judging whether a user device is valid by using a solution generated by the first user solution generating means of the user device and received from the user device and the solution generated by the first authentication solution generating means corresponding to the user device; a second judgement means for judging whether a user device is valid by using a solution generated by the second user solution generating means of the user device and received from the user device and the solution generated by the second authentication solution generating means; and transmission and reception means for performing transmission and reception of transmission-object data with the user device when the first judgement means or the second judgement means judges that the user device is valid, each of the first authentication solution generating means generates the solution by using environmental information unique to each of the user device and registered in advance in the authentication device, and the first judgement means or the second judgement means performs the judgement multiple times by using solutions sequentially generated, while the transmission and reception of the transmission-object data are being performed with the user device.

The environmental information unique to each of the user device is hardly obtained by devices other than the user device. Further, the environmental information cannot be obtained from the outside. Therefore, according to this authentication system, since the first user solution generating means and the first authentication solution generating means use the environmental information unique to each of the user device to generate solutions to be used to judge the validity of the user device, it is possible to prevent a third person who does not know the environmental information unique to each of the user device from masquerading as a user, and to further improve the level of communication security. Note that the environmental information unique to each of the user device will be specifically described later.

Further, according to this authentication system, the same data can be accessed by multiple user devices which have the same second user solution generating means.

The second user solution generating means and the second authentication solution generating means can generate solutions by using environmental information unique to the authentication device, for example. The environmental information unique to the authentication device is hardly obtained by devices other than the authentication device and the user device in which the environmental information has been registered. Further, the environmental information cannot be obtained from the outside. Therefore, when the environmental information unique to the authentication device is registered in advance in each of the predetermined user devices, for exmaple, and the environmental information unique to the authentication device is used to generate a solution, it is possible to prevent a third person who does not know the environmental information unique to the authentication device from masquerading as a user, and to further improve the level of communication security. In addition, the same data can be accessed by multiple user devices which have the same second user solution generating means.

Further, when the environmental information unique to the authentication device is used, there is a possibility that the user device can be prevented from accessing a fake authentication device such as an authentication device of a malicious third person who fakes address information of the authentication device.

Note that the environmental information unique to the authentication device is information of a peripheral device connected to the authentication device, for example.

Examples of the information of a peripheral device connected to the authentication device include the address information or the MAC address information of a router allocated to the authentication device; information on the type or the serial number of a printer connected to the authentication device; information of a server connected to the authentication device; and information of a mouse connected to the authentication device.

Further, the environmental information unique to the authentication device may be information of inside of the authentication device. Examples of the information of inside of the authentication device include folder name information of a folder containing particular data or a predetermined folder, included in the authentication device; file name information of a predetermined file; and address information, hierarchical information, and byte-count information of the folder or file.

Further, the inventor of this application proposes the following authentication device.

Specifically, an authentication device according to this application receives, from a user device, a solution that is a pseudorandom number sequentially generated in the user device by using environmental information unique to each of the user device and judges whether the user device is valid by using the received solution.

This authentication device includes: solution generating means for sequentially generating a solution identical to the solution generated in the user device, in the same order as in the user device; judgement means for judging whether a user device is valid by using a solution received from the user device and the solution generated by the solution generating means; and transmission and reception means for performing transmission and reception of transmission-object data with the user device when the judgement means judges that the user device is valid, in which: the solution generating means generates the solution by using the environmental information unique to each of the user device and registered in advance in the authentication device; and the judgement means performs the judgement multiple times by using solutions sequentially generated, while the transmission and reception of the transmission-object data are being performed with the user device.

In the authentication device, the judgement is performed multiple times by using solutions sequentially generated, while transmission and reception of the transmission-obj ect data are being performed with the user device. In other words, as described above, even in the case where once the user device is judged to be an authorized user device, the validity of the user device is judged multiple times while transmission and reception of the transmission-object data are being performed. Thus, according to this authentication device, it is possible to reduce a possibility of an unauthorized access to be made after the authentication and to improve the level of communication security.

As described above, the environmental information unique to each of the user device is hardly obtained by devices other than the user device and the authentication device in which the environmental information has been registered. Further, the environmental information cannot be obtained from the outside. In order words, in this authentication device, since a solution to be used to judge the validity of the user device is generated by using the environmental information unique to each of the user device, it is possible to prevent a third person who does not know the environmental information unique to each of the user device from masquerading as a user, and to further improve the level of communication security. Note that the environmental information unique to each of the user device is registered in advance in the authentication device.

The environmental information unique to each of the user device can be information of a peripheral device connected to the user device, for example. Examples of the information of a peripheral device connected to the user device include the address information or the MAC address information of a router allocated to the user device; information on the type or the serial number of a printer connected to the user device; information of a server connected to the user device; and information of a mouse connected to the user device.

The environmental information unique to each of the user device may be information of inside of the user device. Examples of the information of inside of the user device include folder name information of a folder containing particular data such as transmission-object data of the user device, or a predetermined folder included in the user device; file name information of a predetermined file; and address information, hierarchical information, and byte-count information of the folder or file.

The judgement means may perform the judgement at any timing as long as the judgement is performed multiple times by using solutions sequentially generated, while transmission and reception of the transmission-object data are being performed with the user device. For example, during the transmission and reception of the transmission-object data performed with the user device, the judgement means may perform the judgement at intervals of a predetermined period of time or every time the amount of data sent and received by the transmission and reception means reaches a predetermined amount of data. Note that the predetermined period of time (the predetermined amount of data) may or may not be a fixed period of time (a fixed amount of data).

Further, a solution generated in the user device may be sent to the authentication device as it is or may be encrypted before being sent to the authentication device.

Specifically, the solution generated in the user device may be sent to the authentication device as it is (without being encrypted).

Further, the solution generated in the user device may be encrypted by using a predetermined algorithm and a predetermined key and then sent to the authentication device, the authentication device may further include solution encrypting means for encrypting the solution generated by the solution generating means, by using the predetermined algorithm and the predetermined key, and the judgement means may collate the encrypted solution received from the user device with the solution encrypted by the solution encrypting means, and judge, when the solutions match, that the user device is valid.

Further, the solution generated in the user device may be encrypted by using a predetermined algorithm and a predetermined key and then sent to the authentication device, the authentication device may further include solution decrypting means for decrypting the encrypted solution received from the user device, by using the predetermined algorithm and the predetermined key used when the solution was encrypted in the user device, and the judgement means may collate the solution decrypted by the solution decrypting means with the solution generated by the solution generating means, and judge, when the solutions match, that the user device is valid.

Note that the predetermined algorithm or the predetermined key may be a fixed algorithm or key which is not changed. At least one of the predetermined algorithm and the predetermined key may be sequentially generated anew at a predetermined timing by using solutions sequentially generated in the user device and the authentication device.

Further, the user device may divide original plaintext data into multiple plaintext division data items in units of a predetermined number of bits, encrypts the multiple plaintext division data items by using a predetermined algorithm and a predetermined key to generate encrypted division data items, and send the encrypted division data items to the authentication device as the transmission-object data, and the authentication device may further include: decryption means for decrypting the encrypted division data items by using the predetermined algorithm and predetermined key used when the multiple plaintext division data items are encrypted, to generate plaintext division data items; and connection means for connecting the plaintext division data items decrypted by the decryption means to generate decrypted data.

The authentication device may hold data identical to the transmission-object data held by the user device, and the judgement means may collate the decrypted data decrypted by the decryption means with the data identical to the transmission-object data, and judge, when those pieces of data match, that the user device is valid.

Further, the authentication device may hold data identical to the transmission-object data held by the user device, the authentication device may further include: division means for dividing the data identical to the transmission-object data into units of a predetermined number of bits to generate division data items; and encryption means for encrypting the division data items by using the predetermined algorithm and the predetermined key, and the judgement means may collate the encrypted division data items received from the user device with the division data items encrypted by the encryption means, and judge, when those pieces of data match, that the user device is valid.

When the authentication device has data identical to the transmission-object data held by the user device, the data can be used to judge the validity of the user device.

Means for establishing two data paths between the authentication device and the user device may be provided, one of the two data paths being used to perform transmission and reception of the solution to be used to judge the validity of the user device, and the other one of the two data paths being used to perform transmission and reception of the transmission-object data. In that case, the transmission-object data and the solution are sent and received in parallel, and the transmission-object data and the solution are sent and received alternately in a time-division manner. Specifically, for example, the transmission-object data and the solution are sent and received alternately in a time-division manner when a packet which contains solution data is sent at predetermined intervals between transmission events of packets which contain transmission-object data.

Further, means for establishing one data path between the authentication device and the user device may be provided, the one data path being used to perform transmission and reception of the solution to be used to judge the validity of the user device, and being also used to perform transmission and reception of the transmission-object data. Specifically, for example, the one data path is used when the solution data is contained in the header of each of packets which contain the transmission-object data and is sent.

As described above, a data path used to receive, from the user device, a solution for judging the validity of the user device and a data path used to send and receive transmission-object data may be identical to each other or may be separated from each other.

Further, the inventor of this application proposes the following authentication device.

An authentication device according to this application is used in combination with at least two user devices, for judging whether each of the user devices is valid, each of the user devices including: a first user solution generating means and a second user solution generating means each for sequentially generating a solution that is a pseudorandom number; solution transmission means for sending the solution generated by the first user solution generating means or the second user solution generating means to the authentication device; and transmission and reception means for performing transmission and reception of transmission-object data with the authentication device when the authentication device judges that the user device is valid, the first user solution generating means being unique to each of the user devices and generating the solution by using environmental information unique to each of the user device, and the second user solution generating means being common to predetermined user devices and generating the solution by using environmental information common to the predetermined user devices.

The authentication device includes: a number of first authentication solution generating means, the number being the same as that of the user devices, each for sequentially generating a solution identical to the solution generated by the first user solution generating means of a corresponding user device, in the same order as in the first user solution generating means; a second authentication solution generating means for sequentially generating a solution identical to the solution generated by the second user solution generating means of the user device, in the same order as in the second user solution generating means; a first judgement means for judging whether a user device is valid by using a solution generated by the first user solution generating means of the user device and received from the user device and the solution generated by the first authentication solution generating means corresponding to the user device; a second judgement means for judging whether a user device is valid by using a solution generated by the second user solution generating means of the user device and received from the user device and the solution generated by the second authentication solution generating means; and transmission and reception means for performing transmission and reception of transmission-object data with the user device when the first judgement means or the second judgement means judges that the user device is valid, in which: the first authentication solution generating means generates the solution by using environmental information unique to each of the user device and registered in advance in the authentication device; and the first judgement means or the second judgement means performs the judgement multiple times by using solutions sequentially generated, while the transmission and reception of the transmission-object data are being performed with the user device.

With the use of the authentication device, the same data can be accessed by multiple user devices which have the same second user solution generating means, as described above.

The second authentication solution generating means and the second user solution generating means may generate solutions by using environmental information unique to the authentication device, for example.

The same operation and effect as provided by the authentication device including the judgement means can be obtained by the following method, for example.

This authentication method is executed in an authentication device including: means for receiving, from a user device, a solution that is a pseudorandom number sequentially generated in the user device by using environmental information unique to each of the user device; and judgement means for judging whether the user device is valid by using the received solution.

Further, the authentication method includes the steps performed by the authentication device of: sequentially generating a solution identical to the solution generated in the user device in the same order as in the user device, by using the environmental information unique to each of the user device and registered in advance in the authentication device; judging whether a user device is valid by using a solution received from the user device and the solution generated in the authentication device; and performing transmission and reception of transmission-object data with the user device when the user device is judged as valid, in which the judgement is performed multiple times by using solutions sequentially generated, while the transmission and reception of the transmission-object data are being performed with the user device.

This application also provides an authentication method executed in an authentication device including: means for receiving, from a user device, a solution that is a pseudorandom number sequentially generated in the user device by using environmental information unique to each of the user device or a solution that is a pseudorandom number sequentially generated in the user device by using environmental information common to predetermined user devices; and judgement means for judging whether the user device is valid by using the received solution.

Further, the authentication method includes the steps performed by the authentication device of: sequentially generating a solution identical to the solution generated in the user device in the same order as in the user device, by using environmental information unique to each of the user device and registered in advance in the authentication device, when the solution generated by using the environmental information unique to each of the user device is received from the user device; sequentially generating a solution identical to the solution generated in the user device in the same order as in the user device, by using the environmental information common to the predetermined user devices, when the solution generated by using the environmental information common to the predetermined user devices is received from the user device; judging whether a user device is valid by using a solution received from the user device and the solution generated in the authentication device; and performing transmission and reception of transmission-object data with the user device when the user device is judged as valid, in which the judgement is performed multiple times by using solutions sequentially generated, while the transmission and reception of the transmission-object data are being performed with the user device.

Further, the inventor of this application proposes the following user device.

Specifically, a user device according to this application is used in combination with an authentication device, the authentication device receiving a solution that is a pseudorandom number sequentiallygenerated in the user device from the user device, judging whether the user device is valid by using the received solution, and including: authentication solution generating means for sequentiallygeneratinga solution that is apseudorandomnumber; judgement means for judging whether a user device is valid by using a solution received from the user device and the solution generated by the authentication solution generating means; and transmission and reception means for performing transmission and reception of transmission-object data with the user device when the judgement means judges that the user device is valid, the judgement means performing the judgement multiple times by using solutions sequentially generated, while the transmission and reception of the transmission-object data are being performed with the user device.

The user device includes: user solution generating means for sequentially generating a solution identical to the solution generated in the authentication device, in the same order as in the authentication device; solution transmission means for sending the solution generated by the user solution generating means to the authentication device; and transmission and reception means for performing the transmission and reception of the transmission-object data with the authentication device when the authentication device judges that the user device is valid, in which the user solution generating means generates the solution by using environmental information unique to each of the user device and registered in advance in the authentication device and the user device.

When the user device is used in combination with the authentication device, the judgement can be per formed multiple times by using solutions sequentially generated, while transmission and reception of transmission-object data are being performed with the authentication device, as described above. Further, it is possible to prevent a third person who does not know the environmental information unique to each of the user device from masquerading as a user, and to further improve the level of communication security.

The user device may further include solution encrypting means for encrypting the solution generated by the user solution generating means by using a predetermined algorithm and a predetermined key, in which the solution encrypted by the solution encrypting means may be sent to the authentication device.

The user solution generating means may include a first user solution generating means unique to each user device and a second user solution generatingmeans common to predetermined user devices, and the first user solution generating means generates a solution by using the environmental information unique to t each of he user device.

Note that the user device according to the present invention is used in combination with any one of the above-mentioned authentication devices.

Further, the inventor of this application proposes the following user device.

Specifically, a user device according to this application is used in combination with an authentication device, the authentication device receiving a solution that is a pseudorandom number sequentially generated in the user device from the user device, judging whether the user device is valid by using the received solution, and including: a first authentication solution generating means and a second authentication solution generating means each for sequentially generating a solution that is a pseudorandom number; judgement means for judging whether a user device is valid by using a solution received from the user device and the solution generated by the first authentication solution generating means or the second authentication solution generating means; and transmission and reception means for performing transmission and reception of transmission-object data with the user device when the judgement means judges that the user device is valid, the same number of the first authentication solution generating means being provided as that of the user device and generating the solution by using preregistered environmental information unique to the corresponding user device, the second authentication solution generating means generating the solution by using environmental information common to predetermined user devices, and the judgement means performing the judgement multiple times by using solutions sequentially generated, while the transmission and reception of the transmission-object data are being performed with the user device.

The user device includes: a first user solution generating means unique to each of the user devices, for sequentially generating a solution identical to the solution generated by the corresponding first authentication solution generating means of the authentication device, in the same order as in the first authentication solution generating means; a second user solution generating means common to predetermined user devices, for sequentially generating a solution identical to the solution generated by the second authentication solution generating means of the authentication device, in the same order as in the second authentication solution generating means; solution transmission means for sending the solution generated by the first user solution generating means or the second user solution generating means to the authentication device; and transmission and reception means for performing the transmission and reception of the transmission-object data with the authentication device when the authentication device judges that the user device is valid.

When the user device is used in combination with the authentication device, the same data can be accessed by multiple user devices which have the same second user solution generating means, as described above.

The second user solution generating means and the second authentication solution generating means may generate solutions, for example, by using environmental information of the authentication device.

The same operation and effect as provided by the above-mentioned user device including the solution generating means can be obtained by the following method, for example.

This data processing method is executed in a user device used in combination with an authentication device, the authentication device receiving a solution that is a pseudorandom number sequentially generated in the user device from the user device, judging whether the user device is valid by using the received solution, and including: authentication solution generating means for sequentially generating a solution that is a pseudorandom number; judgement means for judging whether a user device is valid by using a solution received from the user device and the solution generated by the authentication solution generating means; and transmission and reception means for performing transmission and reception of transmission-object data with the user device when the judgement means judges that the user device is valid, the judgement means performing the judgement multiple times by using solutions sequentially generated, while the transmission and reception of the transmission-object data are being performed with the user device.

Further, the data processing method includes the steps performed by the user device of: sequentially generating a solution identical to the solution generated in the authentication device in the same order as in the authentication device, by using environmental information unique to each of the user device and registered in advance in the authentication device and the user device; sending the generated solution to the authentication device; and performing the transmission and reception of the transmission-object data with the authentication device when the authentication device judges that the user device is valid.

This application also provides a data processing method executed in a user device used in combination with an authentication device, the authentication device receiving a solution that is a pseudorandom number sequentially generated in the user device from the user device, judging whether the user device is valid by using the received solution, and including: a first authentication solution generating means and a second authentication solution generating means each for sequentially generating a solution that is a pseudorandom number; judgement means for judging whether a user device is valid by using a solution received from the user device and the solution generated by the first authentication solution generating means or the second authentication solution generating means; and transmission and reception means for performing transmission and reception of transmission-object data with the user device when the judgement means judges that the user device is valid, the same number of the first authentication solution generating means being provided as that of the user device and generating the solution by using preregistered environmental information unique to the corresponding user device, the second authentication solution generating means generating the solution by using environmental information common to predetermined user devices, and the judgement means performing the judgement multiple times by using solutions sequentially generated, while the transmission and reception of the transmission-obj ect data are being performed with the user device.

Further, the data processing method includes the steps performed by the user device of: sequentially generating a solution identical to the solution generated by the first authentication solution generating means or the second authentication solution generating means of the authentication device, in the same order as in the first authentication solution generating means or the second authentication solution generating means of the authentication device, by using environmental information unique to each of the user device and registered in advance in the authentication device and the user device or the environmental information common to the predetermined user devices; sending the generated solution to the authentication device; and performing the transmission and reception of the transmission-object data with the authentication device when the authentication device judges that the user device is valid.

According to the present invention, it is possible to reduce a possibility of an unauthorized access to be made after the user device is authenticated and to improve the level of communication security.

Brief Description of the Drawings

FIG. 1 is a diagram showing an entire configuration of an authentication system according to an embodiment.
FIG. 2 is a diagram showing a hardware configuration of an authentication device included in the authentication system shown in FIG. 1.
FIG. 3 is a block diagram showing a configuration of a communication device of the authentication device included in the authentication system shown in FIG. 1.
FIG. 4 is a block diagram showing a configuration of an encryption device of the authentication device included in the authentication system shown in FIG. 1.
FIG. 5 is a block diagram showing a configuration of a judgement device of the authentication device included in the authentication system shown in FIG. 1.

FIG. 6 is a diagram showing a hardware configuration of a user device included in the authentication system shown in FIG. 1.

FIG. 7 is a block diagram showing a configuration of an encryption device of the user device included in the authentication system shown in FIG. 1.

FIG. 8 is a block diagram showing a configuration of a communication device of the user device included in the authentication system shown in FIG. 1.

FIG. 9 is a flowchart showing a flow of processing performed in the authentication device of the authentication system shown in FIG. 1.

FIG. 10 is a flowchart showing a flow of processing of judging validity of the user device which has accessed the authentication device.

FIG. 11 is a block diagram showing a configuration of an encryption device of a user device according to Modification 1.

FIG. 12 is a block diagram showing a configuration of an encryption device of an authentication device according to Modification 1.

FIG. 13 is a flowchart showing a flow of processing performed in the authentication device of an authentication system according to Modification 1.

FIG. 14 is a block diagram showing an entire configuration of an authentication system according to Modification 2.

FIG. 15 is a diagram showing a hardware configuration of a user device according to Modification 2.

FIG. 16 is a diagram showing a hardware configuration of an authentication device according to Modification 2.

Best Mode for carrying out the Invention

Hereinafter, a preferred embodiment of the present invention will be described in detail with reference to the drawings.

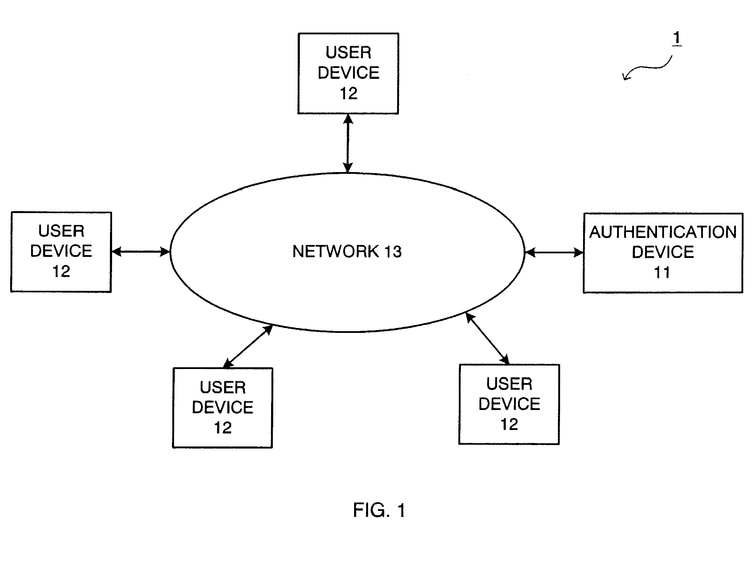

An authentication system 1 according to this embodiment is configured as schematically shown in FIG. 1. The authentication system 1 includes an authentication device 11 and user devices 12 connected to the authentication device 11 via a network 13.

The network 13, which connects the authentication device 11 to each of the user devices 12, is the Internet, for example.

The network 13 may be configured by another means such as an intranet or a dedicated line, instead of the Internet.

Hereinafter, a description will be given of configurations of the authentication device 11 and the user device 12. First, the configuration of the authentication device 11 will be described.

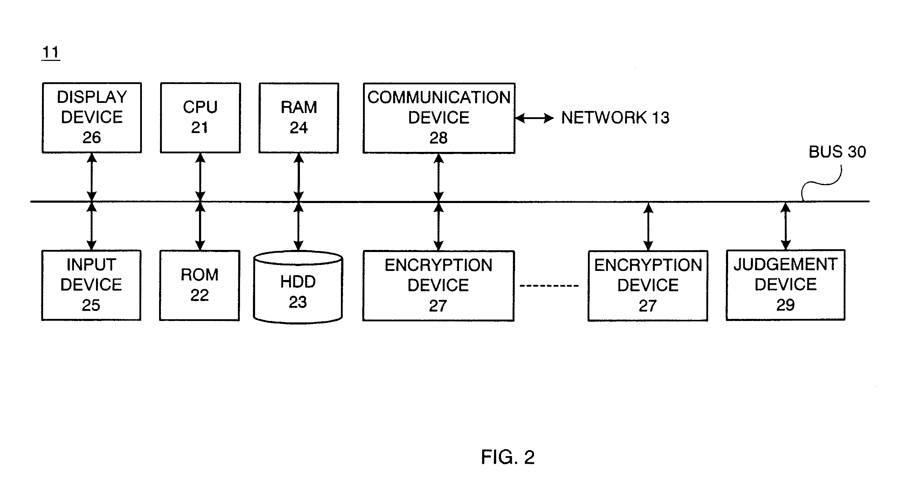

FIG. 2 shows a hardware configuration of the authentication device 11. As shown in FIG. 2, in this embodiment, the authentication device 11 includes a central processing unit (CPU) 21, a read only memory (ROM) 22, a hard disk drive (HDD) 23, a random access memory (RAM) 24, an input device 25, a display device 26, encryption devices 27, a communication device 28, a judgement device 29, and a bus 30. The CPU 21, the ROM 22, the HDD 23, the RAM 24, the input device 25, the display device 26, the encryption devices 27, the communication device 28, and the judgement device 29 can exchange data with each other via the bus 30.

In the ROM 22 or the HDD 23, a predetermined program and predetermined data are recorded (the predetermined data sometimes includes transmission-object data. In this embodiment, the predetermined data includes transmission-object data. The predetermined data also includes data necessary to execute the predetermined program).

The CPU 21 controls the entire authentication device 11, and performs processing described later based on the program and the data stored in the ROM 22 or the HDD 23. The RAM 24 is used as a working storage area when the CPU 21 performs the processing.

The input device 25 is configured by a keyboard, a mouse, and the like, and is used to input a command and data. The display device 26 is configured by a liquid crystal display (LCD), a cathode ray tube (CRT), or the like, and is used to display a command, inputted data, the status of processing described later, and the like.

The encryption device 27 decrypts encrypted data that is encrypted transmission-object data received from the user device 12 and encrypts transmission-object data held by the authentication device 11.

The communication device 28 performs communications with the user device 12 via the network 13. Note that a communication device 38 of the user device 12 performs communications with the authentication device 11 via the network 13.

The judgement device 29 collates a solution received from the user device 12 via the network 13 with a solution generated by the encryption device 27 to judge whether those solutions match.

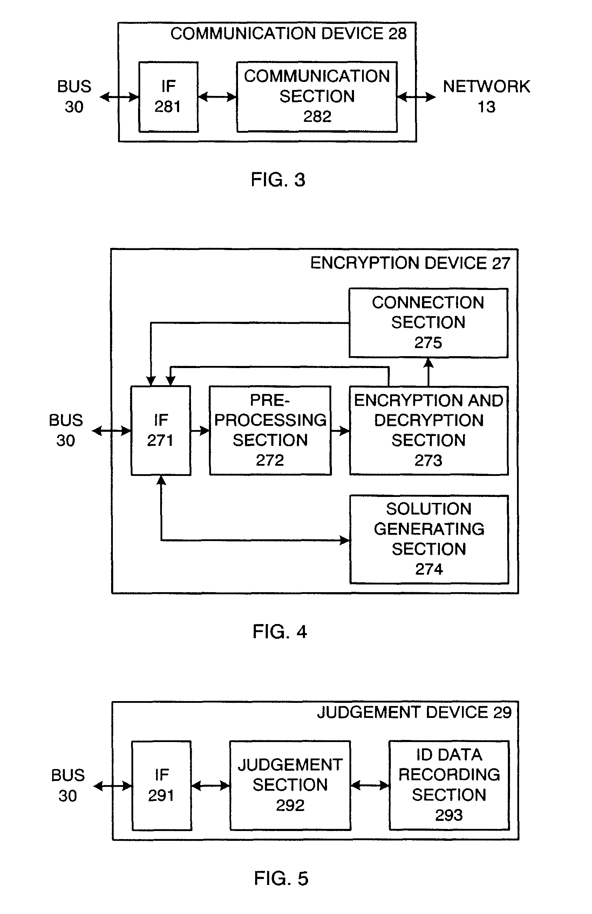

Next, a configuration of the communication device 28 will be described. FIG. 3 is a block configuration diagram of the communication device 28.

The communication device 28 includes an interface section 281 and a communication section 282.

The interface section 281 exchanges data between the bus 30 and the communication device 28. The interface section 281 receives, from the communication section 282, an access request signal, solution data (data of solution), or encrypted data, which has been sent from the user device 12, and sends the received access request signal, solution data, or encrypted data to the bus 30. Further, the interface section 281 receives, from the bus 30, a solution request signal described later or encrypted data, which is destined for the user device 12, and sends the received solution request signal or encrypted data to the communication section 282.

Next, a configuration of the encryption device 27 will be described. FIG. 4 is a block configuration diagram of the encryption device 27.

The encryption device 27 includes an interface section 271, a pre-processing section 272, an encryption and decryption section 273, a solution generating section 274, and a connection section 275.

The interface section 271 exchanges data between the bus 30 and the communication device 28.

The interface section 271 receives, from the communication device 28 via the bus 30, the solution request signal to be sent to the user device 12 or encrypted division data items (the encrypted division data items are obtained when plaintext transmission-object data is divided in units of a predetermined number of bits to generate multiple plaintext division data items and the plaintext division data items are encrypted), also receives transmission-object data from the HDD 23 via the bus 30, and sends the received encrypted division data items or transmission-object data to the pre-processing section 272.

When solution data is received, the interface section 271 sends data indicating that the solution data has been received, to the solution generating section 274.

On the other hand, as described later, the interface section 271 receives decrypted transmission-object data from the connection section 275 and encrypted data from the encryption and decryption section 273, and sends those pieces of data to the bus 30.

The pre-processing section 272 has a function of dividing the transmission-object data received from the bus 30 via the interface section 271, in units of the predetermined number of bits to generate plaintext division data items and sending the plaintext division data items to the encryption and decryption section 273. How to divide the transmission-object data will be described later.

The encryption and decryption section 273 has a function of receiving the plain text division data items or the encrypted division data items from the pre-processing section 272; encrypting, when the plaintext division data items are received, the plaintext division data items; and decrypting, when the encrypted division data items are received, the encrypted division data items. Note that, in the encryption and decryption section 273 of this embodiment, the reference number of bits, serving as a unit of processing used when processings of encryption and decryption are performed, is fixed. The reference number of bits used in this embodiment is 8 bits, but it is not limited to 8 bits. Details of the processings of encryption and decryption will be described.

In this embodiment, the description is given on the assumption that the processings of encryption and decryption are performed by using a given algorithm and a given key which are unique to each user device 12. As described later in Modification 1, at least one of the algorithm and the key, to be used for encryption and decryption, may be sequentially generated anew at predetermined timing by using solutions sequentially generated in the user device 12 and the authentication device 11. Further, as described later in Modification 2, the processings of encryption and decryption may be performed by using a given algorithm and a given key which are common to multiple predetermined user devices. Further, at least one of the algorithm and the key may be sequentially generated anew by using solutions sequentially generated in the multiple predetermined user devices and the authentication device 11.

The solution generating section 274 sequentially generates a solution when the data indicating that the solution request signal has been received is received from the interface section 271.

The solutions generated by the solution generating section 274 of the authentication device 11 are identical to the solutions generated by a solution generating section 374 described later of the user device 12 in the same order as in the solution generating section 274. The solution used in this embodiment is a pseudorandom number.

The generated solution is sent to the interface section 271 and further sent to the judgement device 29 via the bus 30.

The connection section 275 has a function of connecting plaintext division data items generated by decrypting encrypted division data items in the encryption and decryption section 273 in the original order to obtain one piece of transmission-object data. The transmission-object data is sent to the interface section 271 and further sent, via the bus 30, to the HDD 23 or the CPU 21 as needed.

The connection section 275 also has a function of connecting encrypted division data items generated by encrypting plaintext division data items in the encryption and decryption section 273 to obtain one piece of encrypted data. The encrypted data is sent to the interface section 271, further sent from the interface section 271 to the communication section 282 of the communication device 28 via the bus 30, and further sent from the communication section 282 to the user device 12. Note that the connection section 275 may not have the function of connecting encrypted division data items generated by encrypting plaintext division data items in the encryption and decryption section 273.

In this case, the encrypted division data items are sequentially sent in the order of encryption to the communication device of the user device 12 serving as a transmission destination. When the connection section 275 does not have the function of connecting the encrypted division data items, the encrypted division data items can be directly sent to the communication section 282 without passing through the connection section 275.

Note that the same number of encryption devices 27 as that of registered user devices 12 are provided, and each encryption device 27 has the same configuration as the encryption device of each of the registered user devices 12.

Next, a configuration of the judgement device 29 will be described. FIG. 5 is a block configuration diagram of the judgement device 29.

The judgement device 29 includes an interface section 291, a judgement section 292, and an ID data recording section 293.

The interface section 291 receives, from the communication device 28 via the bus 30, ID data added to an access request signal or solution data which has been sent from the user device 12, or receives solution data generated by the encryption device 27 via the bus 30, and sends the received ID data or solution data to the judgement section 292.

The interface section 291 also receives judgement data indicating that the user device 12 is valid from the judgement section 292. The judgement data is sent to the HDD 23 or the like via the bus 30 and transmission and reception of data are started between the user device 12 and the authentication device 11.

The interface section 291 also receives a solution request signal described later from the judgement section 292, and sends the solution request signal to the communication device 28 via the bus 30.

In the ID data recording section 293, multiple pieces of ID data indicating multiple user devices registered in the authentication device 11 are recorded.

Upon reception of an access request from the user device 12, the judgement section 292 judges whether ID data sent from the user device 12 has been recorded in the ID data recording section 293. When the ID data has been recorded, the judgement section 292 generates a solution request signal for requesting the user device 12 to send solution data. The solution request signal is sent from the interface section 291 to the communication device 28 via the bus 30 and further sent to the user device 12.

The solution data sent from the user device 12 is collated with solution data generated by the encryption device 27. When those pieces of solution data match, the user device 12 is judged as valid.

The judgement section 292 has a timer (not shown). Every time a predetermined period of time elapses after the user device 12 is judged as valid, the judgement section 292 generates a solution request signal to request the user device 12 to send new solution data.

Note that, in this embodiment, the authentication device 11 sends a solution request signal to the user device 12, and, in response to this, the user device 12 sends solution data to the authentication device 11. The solution-data generation and transmission mechanism is not limited to this. The configuration may be made such that the timing of generation of the solution data after access authentication is judged in advance between the authentication device 11 and the user device 12 and the solution data generated in the user device 12 is sent to the authentication device 11.

Next, the configurationof the user device 12 will be described.

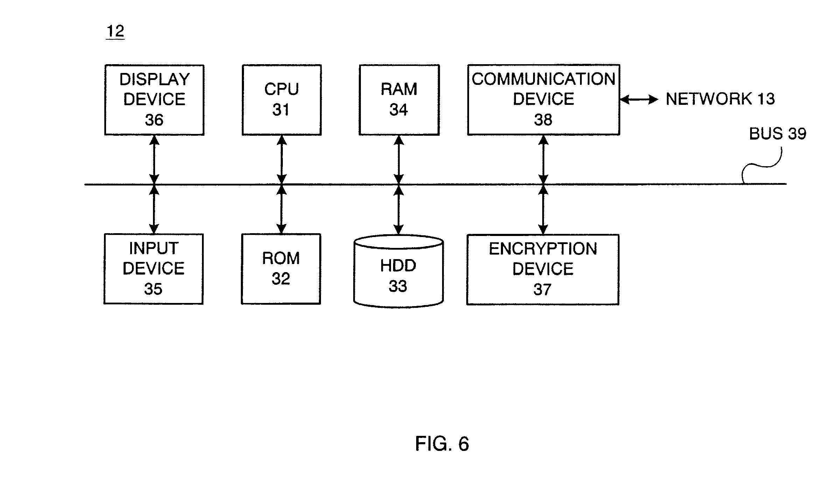

FIG. 6 shows a hardware configuration of the user device 12.

The hardware configuration of the user device 12 is basically the same as that of the authentication device 11. However, the user device 12 is different from the authentication device 11 in that the user device 12 does not include the judgement device 29 included in the authentication device 11.

In the user device 12, a CPU 31, a ROM 32, an HDD 33, a RAM 34, an input device 35, a display device 36, the communication device 38, and a bus 39 are identical to the CPU 21, the ROM 22, the HDD 23, the RAM 24, the input device 25, the display device 26, the communication device 28, and the bus 30 in the authentication device 11, respectively.

Note that predetermined data recorded in the ROM 32 or the HDD 33 includes ID data unique to each of the user device 12 and transmission-object data.

An encryption device 37 has a function of encrypting transmission-object data and decrypting encrypted data as in the encryption device 27 of the authentication device 11.

Hereinafter, a configuration of the encryption device 37 will be described.

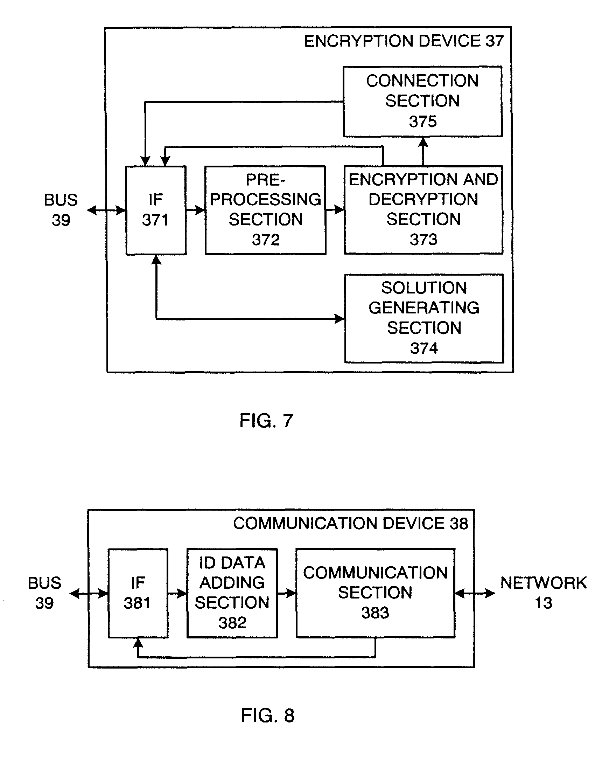

FIG. 7 is a block configuration diagram of the encryption device 37.

The encryption device 37 includes an interface section 371, a pre-processing section 372, an encryption and decryption section 373, a solution generating section 374, and a connection section 375.

The interface section 371 exchanges data between the bus 39 and the encryption device 37. The interface section 371 receives, from the communication device 38 via the bus 39, a solution request signal or encrypted division data items, sent from the authentication device 11, also receives transmission-object data from the HDD 33 via the bus 39, and sends the received encrypted division data items or transmission-object data to the pre-processing section 372.

When the solution request signal is received, the interface section 371 sends data indicating that the solution request signal has been received to the solution generating section 374.

On the other hand, as described later, the interface section 371 receives decrypted transmission-object data from the connection section 375 and encrypted data from the encryption and decryption section 373, and sends those pieces of data to the bus 39.

The pre-processing section 372 has a function of dividing the transmission-object data received from the bus 39 via the interface section 371, in units of a predetermined number of bits to generate plaintext division data items and sending the plaintext division data items to the encryption and decryption section 373.

The encryption and decryption section 373 has a function of receiving the plain text division data items or the encrypted division data items from the pre-processing section 372; encrypting, when the plaintext division data items are received, the plaintext division data items; and decrypting, when the encrypted division data items are received, the encrypted division data items. Note that, in the encryption and decryption section 373 of this embodiment, the reference number of bits, serving as a unit of processing used when processings of encryption and decryption are performed, is fixed. The reference number of bits used in this embodiment is 8 bits, but it is not limited to 8 bits.

In this embodiment, the description is given on the assumption that the processings of encryption and decryption are performed by using a given algorithm and a given key as in the authentication device 11.

The solution generating section 374 sequentially generates a solution when the data indicating that the solution request signal has been received is received from the interface section 371.

The generated solution is sent to the interface section 371 and further sent to the communication device 38 via the bus 39.

Functions of the connection section 375 of the user device 12 is the same as those of the connection section 275 of the authentication device 11. The connection section 375 connects plaintext division data items generated by decrypting encrypted division data items in the encryption and decryption section 373, to generate one piece of transmission-object data. The transmission-object data is sent to the HDD 33 or the like via the bus 39. The connection section 375 also has a function of connecting encrypted division data items generated by encrypting plaintext division data items in the encryption and decryption section 373, to obtain one piece of encrypted data. The encrypted data is sent to the interface section 371, further sent from the interface section 371 to the communication section 383 of the communication device 38 via the bus 39, and further sent from the communication section 383 to the authentication device 11 via the network 13. Note that, as in the encryption device 27 of the authentication device 11, the connection section 375 may not have the function of connecting encrypted division data items generated by encrypting plaintext division data items in the encryption and decryption section 373.

FIG. 8 is a diagram showing a block configuration of the communication device 38.

The communication device 38 includes an interface section 381, an ID data adding section 382, and the communication section 383.

The interface section 381 exchanges data between the bus 39 and the communication device 38. The interface section 381 receives, from the communication section 383, a solution request signal or encrypted data, which has been sent from the authentication device 11, and sends the received solution request signal or encrypted data to the bus 39. Further, the interface section 381 receives, from the bus 39, an access request signal described later, solution data, or encrypted data, which is destined for the authentication device 11, and sends the received access request signal, solution data, or encrypted data to the ID data adding section 382.

When the access request signal, solution data, or encrypted data is sent to the authentication device 11, the ID data adding section 382 adds ID data to, for example, the header of the access request signal or the like to be sent. The ID data identifies the user device 12 which sends the encrypted data or the like. The ID data uniquely specifies each user device 12, and is recorded in the ROM 32 or the HDD 33. The ID data adding section 382 reads ID data from the ROM 32 or the HDD 33 and adds the ID data to the encrypted data or the like. The authentication device 11 can understand, from the ID data added to the received encrypted data or the like, the user device 12 which has sent the encrypted data or the like. The ID data adding section 382 sends the encrypted data or the like, to which the ID data has been added, to the communication section 383. The communication section 383 receives the encrypted data or the like and sends it to the authentication device 11.

Next, a flow of processing performed in the authentication system 1 will be described.

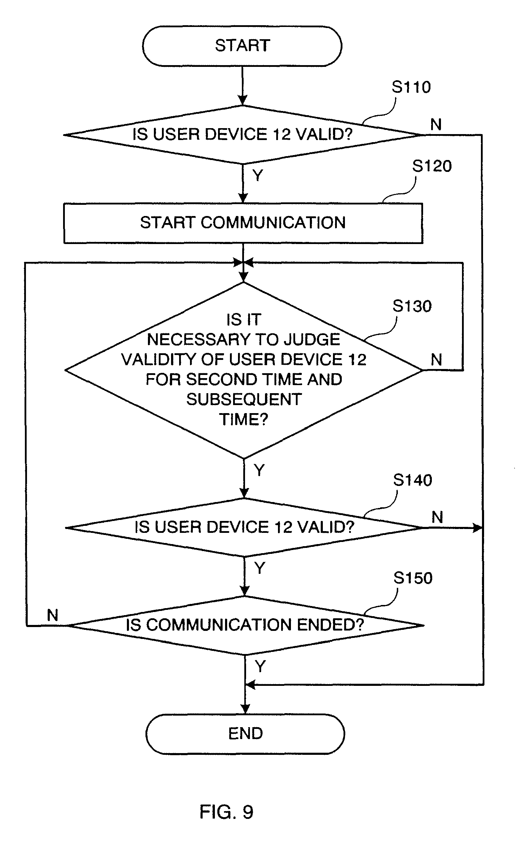

An outline description will be given of the flow of processing performed in the authentication system 1 with reference to FIG. 9.

First, the authentication device 11 judges whether the user device 12 which has accessed the authentication device 11 is valid (S110).

When it is judged that the user device 12 which has accessed the authentication device 11 is not valid (No in S110), transmission and reception of encrypted data are not started between the authentication device 11 and the user device 12.

On the other hand, when it is judged that the user device 12 which has accessed the authentication device 11 is valid (Yes in S110), communications are started between the authentication device 11 and the user device 12 (S120) and transmission and reception of encrypted data that is encrypted transmission-object data are started.

After the transmission and reception of encrypted data are started, when it is necessary to judge the validity of the user device 12 for the second time or more (Yes in S130), the authentication device 11 judges whether the user device 12 which has accessed the authentication device 11 is valid (S140). Note that the description is given, in this embodiment, on the assumption that the case where the validity of the user device 12 needs to be judged for the second time or more is the case where a predetermined period of time has elapsed after the access to the authentication device 11 is authenticated. The necessity of the validity check is not limited to this case. It may be necessary to judge the validity of the user device 12 for the second time or more when the amount of data sent and received between the authentication device 11 and the user device 12 reaches a predetermined amount of data. Note that a predetermined period of time (a predetermined amount of data) may or may not be a fixed period of time (a fixed amount of data).

When it is judged that the user device 12 which has accessed the authentication device 11 is not valid (No in S140), the transmission and reception of the encrypted data are not continued between the authentication device 11 and the user device 12 and the processing is ended.

On the other hand, when it is judged that the user device 12 which has accessed the authentication device 11 is valid (Yes in S140), and when communications are not ended between the authentication device 11 and the user device 12 (No in S150), the transmission and reception of encrypted data are continued until it becomes necessary again to judge the validity of the user device 12.

When the communications are ended between the authentication device 11 and the user device 12 (Yes in S150), the processing is ended.

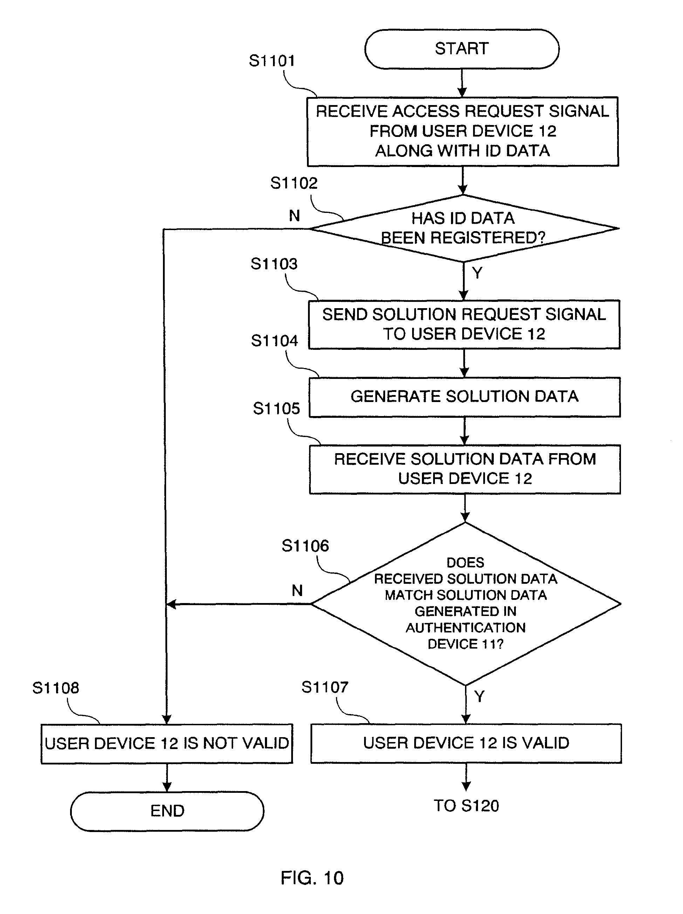

Referring to FIG. 10, a detailed description will be given of the process of S110, in which the authentication device 11 judges whether the user device 12 which has accessed the authentication device 11 is valid.

First, the user device 12 sends an access request signal to which ID data has been added, to the authentication device 11.

In the user device 12, for example, when a command to access the authentication device 11 is inputted from the input device 35, the CPU 31 generates the access request signal, reads the ID data of the user device 12 from the ROM 32 or the HDD 33, and temporarily records the ID data in the RAM 34, for example. The ID data is sent from the ROM 32 or the HDD 33 to the communication device 38 via the bus 39. The ID data is added to the access request signal in the ID data adding section 382. The access request signal, to which the ID data has been added, is sent from the communication section 383 to the communication device 28 of the authentication device 11 via the network 13.

When the authentication device 11 is accessed by the user device 12 (S110), the authentication device 11 judges whether the ID data sent from the user device 12 has been registered (S1102).

Specifically, when the communication device 28 receives the access request signal, to which the ID data has been added, from the user device 12, the ID data which has been added to the access request signal is sent from the interface section 281 of the communication device 28 to the judgement section 292 of the judgement device 29 via the bus 30. The judgement section 292 judges whether ID data that matches the received ID data is included in the ID data recording section 293.

When the ID data sent from the user device 12 has been registered in the authentication device 11 (when ID data that matches the received ID data is included) (Yes in S1102), the authentication device 11 sends a solution request signal to the user device 12 (S1103).

Specifically, the judgement section 292 of the judgement device 29 generates the solution request signal for requesting the user device 12 to send solution data. The solution request signal is sent from the interface section 291 to the communication device 28 via the bus 30. The solution request signal is further sent from the communication device 28 to the user device 12.

Note that the solution request signal generated by the judgement section 292 of the judgement device 29 is also sent to the encryption device 27 corresponding to the user device 12 included in the authentication device 11, and the encryption device 27 generates solution data (S1104).

When the solution request signal is received, the user device 12 generates solution data to be sent to the authentication device 11.

Specifically, the solution request signal is received by the communication device 38 and sent to the interface section 371 of the encryption device 37 via the bus 39. When the solution request signal is received, the interface section 371 of the encryption device 37 sends data indicating that the solution request signal has been received, to the solution generating section 374. The solution generating section 374 receives the data.

On the other hand, when the solution request signal is received, the interface section 271 of the encryption device 27 of the authentication device 11 sends data indicating that the solution request signal has been received, to the solution generating section 274. The solution generating section 274 receives the data.

Upon reception of the data, the solution generating section 374 or the solution generating section 274 starts generating a solution.

Hereinafter, how the solution generating section 374 generates a solution will be described. In this embodiment, every time the solution request signal is received by the interface section 271 or 371, the corresponding solution generating section 274 or 374 generates a solution. The solution generated in this embodiment is a matrix (X) of 8 rows by 8 columns, but the form of the solution is not limited to this.

Note that a procedure to generate a solution in the solution generating section 274 of the authentication device 11 is the same as that in the solution generating section 374 of the user device 12.

In this embodiment, the solution generating section 374 continuously generates a solution in a nonlinear transition manner, but the characteristic of the solution is not necessarily required. As a result of the nonlinear transition, the solution is a pseudorandom number.

To continuously generate a solution in the nonlinear transition manner, the following methods are conceivable: (1) the solution generation process includes calculation of a power of a past solution; (2) the solution generation process includes multiplication of two or more past solutions; and a combination of (1) and (2).

In this embodiment, the solution generating section 374 has a 01 solution ($X_{01}$) and a 02 solution ($X_{02}$) as predetermined initial matrices (for example, the 01 solution and the 02 solution are recorded in a predetermined memory such as the HDD 33 or the ROM 32). Each user devices 12 has different initial matrices, and therefore, each user device 12 generates a different solution.

Note that the solution generating section 274 of the encryption device 27 in the authentication device 11 records the same initial matrices as each user device 12 in association with the ID data in a predetermined memory such as the HDD 23 or the ROM 22.

The solution generating section 374 substitutes the initial matrices into a solution generation algorithm to generate a first solution ($X_1$) as follows.

The first solution ($X_1$)=$X_{02}X_{01}+\alpha$ (in this embodiment, "$\alpha$" is a matrix of 8 rows by 8 columns)

This is the solution generated first.

When the interface section 371 receives the next solution request signal from the bus 39, the solution generating section 374 generates a second solution ($X_2$) as follows.

The second solution ($X_2$)=$X_1X_{02}+\alpha$

Similarly, every time the interface section 371 receives a solution request signal from the bus 39, the solution generating section 374 generates a third solution, a fourth solution, ... an N-th solution, as follows.

$$\text{The third solution } (X_3)=X_2X_1+\alpha$$

$$\text{The fourth solution } (X_4)=X_3X_2+\alpha$$

$$:$$

$$\text{The N-th solution } (X_N)=X_{N-1}X_N-2+\alpha$$

The solution generated as described above is sent to the interface section 371 and is also held in the solution generating section 374. In order to generate the N-th solution ($X_N$) in this embodiment, the (N-1)-th solution ($X_{N-1}$) and the (N-2)-th solution ($X_{N-2}$), that is, the two solutions generated immediately before are used. Therefore, to generate a new solution, the solution generating section 374 needs to hold the two solutions generated immediately before (or a section other than the solution generating section 374 needs to hold the two solutions). Conversely, solutions that are older than the two solutions generated immediately before are not used any more to generate a new solution. Thus, in this embodiment, the solution generating section 374 always holds the two solutions generated immediately before. When a new solution is generated, the older of the two solutions generated immediately before is deleted from the predeterminedmemory inwhich that solution has been recorded.

The solutions generated as described above are chaotic solutions which are generated in the nonlinear transition manner, that is, pseudorandom numbers.

Note that, when a solution is generated by the solution generating section 374 as described above, environmental information unique to each user device 12 may be used.

For example, the above-mentioned "$\alpha$" can be environmental information. Alternatively, the 01 solution ($X_{01}$) and the 02 solution ($X_{02}$), serving as the initial matrices held by the solution generating section 374 of each user device 12 and the solution generating section 274 of the authentication device 11 corresponding to the user device 12, can be environmental information. In short, the environmental information unique to each of the user device 12 may be used to generate matrices (including the initial matrices) or may be used as the initial matrices.

In addition, "$\alpha$" serving as environmental information is not necessarily used every time a solution is generated. For example, "$\alpha$" may be used only for the first solution ($X_1$)=$X_{02}X_{01}+\alpha$ and when the first solution is used. The second solution and the subsequent solutions may be obtained by a general expression of "the N-th solution ($X_N$) =$X_{N-1}X_{N-2}$".

The environmental information unique to each user device 12 can be information of a peripheral device connected to the user device 12, for example. Specifically, examples of the information of a peripheral device include: the address information or the MAC address information of a router allocated to each user device 12; information on the type or the serial number of a printer connected to each user device 12; information of a server connected to each user device 12; and information of a mouse connected to each user device 12.

The environmental information unique to each user device 12 can also be information of inside of the user device 12. Specifically, examples of the information of inside of the user device 12 include: folder name information of a folder storing particular data such as transmission-object data or folder name information of a predetermined folder included in each user device 12; file name information of a predetermined file; and address information, hierarchical information, and byte-count information of the folder or file.

Predetermined calculation or predetermined conversion is applied to such environmental information to convert the environmental information into a number falling in a range where the number can be used as "$\alpha$", the 01 solution ($X_{01}$), or the 02 solution ($X_{02}$) to use the obtained number.

Specifically, "$\alpha$" is obtained, for example, when the code of the characters composing a file name is expressed in binary "1s" and "0s", by sequentially arranging a data string expressed by "1s" and "0s" as elements in a matrix of 8 rows by 8 columns. In a case where the number of the data items included in the data string obtained when the file name is expressed in binary "1s" and "0s" is smaller than the number of the elements in a matrix of 8 rows by 8 columns, that is, 64, the data string is used repeatedly. Of course, how the environmental information is used may be judged appropriately. For example, when a file name is composed by alphabetic characters, it is possible to replace "A" with "1", "B"with"2", "C" with "3", ...., and "Z" with "26", and to appropriately arrange numbers obtained by adding all those numbers, multiplying all those numbers, or in another way, as elements in a matrix of 8 rows by 8 columns.

In addition to the above-mentioned expression of "the N-th solution $(XN)=X_{N-1}X_{N-2}(+\alpha)$", the following expressions can also be used to generate the N-th solution in the nonlinear transition manner.

Note that "$\alpha$" in brackets indicates that "$\alpha$" is not necessarily required to obtain the second solution and the subsequent solutions, also in example cases described below.

Examples of the expressions include:

(a)

$$\text{The N-th solution } (X_N) = (X_{N-1})^P (+\alpha) ;$$

(b)

$$\text{The N-th solution } (X_N) = (X_{N-1})^P (X_{N-2})^Q (X_{N-3})^R (X_{N-4})^S (+\alpha) ;$$

and
(c)

$$\text{The N-th solution } (X_N) = (X_{N-1})^P + (X_{N-2})^Q (+\alpha) .$$

Note that "P", "Q", "R", and "S" are predetermined constants. The solution generating section 374 has one initial matrix when (a) expression is used, two initial matrices when (c) expression is used, and four initial matrices when (b) expression is used.

Environmental information unique to each user device 12 is hardly obtained by devices other than the user device 12 and the authentication device 11 in which the environmental information has been registered. The environmental information unique to each user device 12 cannot be obtained from the outside.

Therefore, when the environmental information unique to each user device 12 is stored in advance in the solution generating section 274 of the encryption device 27 of the authentication device 11 and in the solution generating section 374 of the encryption device 37 of the user device 12 and the environmental information is used as "$\alpha$" or the like to generate solution data, it is possible to prevent a thirdpersonwho does not know the environmental information unique to each of the user device 12 from pretending to be the user, and to further improve the level of communication security.

Further, the above-mentioned "$\alpha$" can also be variable particular information, instead of being environmental information as described above.

This particular information can be information which spontaneously arises one after another as time elapses and can be obtained in common even from remote locations. Examples of the particular information include information judged based on the weather in a particular region; information judged based on the content of television broadcasting of a television station, which is broadcasted at a particular time slot; and information judged based on a result of a particular sport.

As described above, the solution data generated by the solution generating section 374 of the user device 12 is sent from the interface section 371 to the communication device 38 via the bus 39. The solution data is further sent from the communication section 383 of the communication device 38 to the communication device 28 of the authentication device 11 via the network 13.

Further, the solution data generated by the solution generating section 274 of the encryption device 27 of the authentication device 11 is sent from the interface section 271 to the judgement device 29 via the bus 30.

Upon reception of the solution data from the user device 12 (S1105), the authentication device 11 judges whether the received solution data matches the solution data generated in the authentication device 11 (S1106).

Specifically, when the communication device 28 receives the solution data from the user device 12, the solution data is sent from the interface section 281 of the communication device 28 to the judgement section 292 of the judgement device 29 via the bus 30. The judgement section 292 collates the solution data received from the user device 12 with the solution data generated by the encryption device 27 of the authentication device 11 to judge whether those pieces of solution data match.

When the solution data received from the user device 12 matches the solution data generated by the encryption device 27 of the authentication device 11 (Yes in S1106), the judgement section 292 judges that the user device 12 is valid (S1107).

On the other hand, when the solution data received from the user device 12 does not match the solution data generated by the encryption device 27 of the authentication device 11 (No in S1106), the judgement section 292 judges that the user device 12 is not valid (S1108).

When the ID data sent from the user device 12 has not been registered in the authentication device 11 (when ID data that matches the received ID data is not included) (No in S1102), the judgement section 292 also judges that the user device 12 is not valid (S1108).

As described above, the process of S110, in which the authentication device 11 judges whether the user device 12 which has accessed the authentication device 11 is valid, is ended.

When it is judged that the user device 12 is valid, access is allowed and transmission and reception of encrypted data are started (S120).

Hereinafter, a description will be given of a process of encrypting transmission-object data held by the authentication device 11 and sending the encrypted transmission-object data to the user device 12.

First, transmission-object data is read based on a request from the user device 12. Specifically, the CPU 21 reads the transmission-object data from the HDD 23 and temporarily stores the transmission-object data, for example, in the RAM 24. The transmission-object data is sent from the HDD 23 to the encryption device 27 via the bus 30. In more detail, the transmission-object data is sent to the pre-processing section 272 via the interface section 271.

In the pre-processing section 272, the transmission-object data is divided in units of the predetermined number of bits to generate plaintext division data items. The plaintext division data items are sent to the encryption and decryption section 273 and encrypted by using a given algorithm and a given key to generate encrypted division data items. The encrypted division data items are sent to the connection section 275. The connection section 275 connects the encrypted division data items to generate one piece of encrypted data. In this case, the order of the encrypted division data items corresponds to the original order of the plain text division data items.

The encrypted data generated as described above is sent to the communication device 28 of the authentication device 11 via the bus 30. The encrypted data is received by the interface section 281 of the communication device 28 and sent to the communication section 282. The communication section 282 sends the encrypted data to the user device 12 via the network 13.

The above-mentioned process is similarly performed when transmission-object data held by the user device 12 is encrypted and sent to the authentication device 11.

Next, a description will be given of a decryption process of the encrypted data performed when the user device 12 receives the encrypted data from the authentication device 11.

The encrypted data sent from the authentication device 11 to the user device 12 is received by the communication section 383 of the communication device 38 of the user device 12 and sent to the interface section 381. The interface section 381 sends the encrypted data to the encryption device 37.

The pre-processing section 372 of the encryption device 37 receives the encrypted data via the interface section 371. The pre-processing section 372 divides the received encrypted data in units of the predetermined number of bits to generate encrypted division data items. To generate the encrypted division data items by dividing the encrypted data, the pre-processing section 372 performs the processing reverse to the processing performed in the connection section 275 of the authentication device 11. Specifically, the encrypted data is divided into a plurality of encrypted division data items in units of 8 bits from the top.

Next, the encrypted division data items are sent to the encryption and decryption section 373 and are decrypted to generate plaintext division data items. The decryption is performed by using the given algorithm and the key which have been used for the encryption performed in the authentication device 11.

The plaintext division data items generated as described above are sent to the connection section 375. The connection section 375 receives the plaintext division data items and connects the plaintext division data items together to regenerate one piece of plaintext data, which is the original state of the transmission-object data before the encryption has been applied in the authentication device 11.

The above-mentioned process is similarly performed when transmission-object data held by the user device 12 is encrypted and sent to the authentication device 11.

Note that transmission-object data may be any type of data as long as the data needs to be sent from the user device 12 (the authentication device 11) to the authentication device 11 (the user device 12). In this embodiment, it is assumed that the transmission-object data is recorded in the HDD 33 (the HDD 23). The transmission-object data may be the data read from another recording medium such as an external recording medium to the user device 12 or the authentication device 11.

As described above, transmission and reception of encrypted data are performed between the authentication device 11 and the user device 12.

On the other hand, when it is judged that the user device 12 is not valid, an access to the authentication device 11 is not allowed and thus communications (transmission and reception of encrypted data) are not started.

When communications are started (S120), the process of S130, in which the validity of the user device 12 is judged at intervals of a predetermined period of time, is performed in this embodiment.

Specifically, the judgement section 292 of the judgement device 29 generates a solution request signal for requesting the user device 12 to send new solution data, at intervals of a predetermined period of time (for example, 30 seconds) after the transmission and reception of encrypted data are started. The subsequent processes are performed as in S1103 to S1108 of FIG. 10. Solution data is generated in each of the user device 12 and the authentication device 11 based on this solution request signal.

The judgement section 292 of the judgement device 29 judges whether the solution data received from the user device 12 matches the solution data generated in the authentication device 11.

When it is judged that the solution data received from the user device 12 matches the solution data generated by the encryption device 27 of the authentication device 11, the judgement section 292 judges that the user device 12 is valid, and thus, the transmission and reception of encrypted data are continued.

On the other hand, when it is judged that the solution data received from the user device 12 does not match the solution data generated by the encryption device 27 of the authentication device 11, the judgement section 292 judges that the user device 12 is not valid, and thus, the transmission and reception of encrypted data are ended.

In the authentication system 1 having such a configuration, while transmission and reception of encrypted data are being performed between the authentication device 11 and the user device 12, the judgement of solution match is performed multiple times by using solutions generated sequentially. In other words, even when it is once judged by the authentication device 11 that the user device 12 is valid, the validity of the user device 12 is judged many times by performing the judgement of solution match multiple times while transmission and reception of transmission-object data are being performed. Thus, according to the authentication system 1, it is possible to reduce the possibility of an unauthorized access to be made after authentication and to improve the level of communication security. Further, because the validity of the user device 12 is judged by using new solutions to be generated sequentially, in other words, by using a different solution each time, the level of communication security can be improved.

Note that, in the above-mentioned embodiment, transmission-object data and a solution are sent and received in parallel. In other words, a packet which contains solution data is sent at predetermined intervals between transmission events of packets which contain transmission-object data. Two data paths are established between the authentication device 11 and the user device 12 in the authentication system 1 of this embodiment. One of the two data paths is used to send and receive solution data, for judging the validity of the user device 12. The other one of the two data paths is used to send and receive encrypted data.

However, the transmission and reception method is not limited thereto. The transmission and reception of transmission-object data including encrypted data, and the transmission and reception of a solution may be performed alternately in a time-division manner. Specifically, after communications are started, while solution data is being sent from the user device 12 to the authentication device 11, transmission-object data may not be sent or received. Specifically, for example, solution data may be sent in the header of each of packets which contain transmission-obj ect data. In other words, one data path may be established between the authentication device 11 and the user device 12 in the authentication system 1. The data path is used to send and receive solution data, for judging the validity of the user device 12, and also used to send and receive encrypted data.

As described above, a data path to receive a solution for judging the validity of the user device 12, from the user device 12 and a data path to send and receive transmission-object data may be identical to each other or may be separated from each other.

Note that the description has been given on the assumption that, in the authentication system 1, solution data itself which is generated in the user device 12 based on a solution request signal sent from the authentication device 11 is sent to the authentication device 11 via the network 13. Transmission of the solution data is not limited thereto. The solution data generated in the user device 12 may be encrypted in the encryption device 37 by using a given algorithm and a given key before being sent to the authentication device 11 via the network 13. When the encrypted solution data is sent via the network 13, the level of security becomes higher than when the solution data itself is sent.

In the case where the encrypted solution data is sent from the user device 12 as descried above, the configuration can be made such that solution data generated in the authentication device 11 is also encrypted by using the given algorithm and the given key in the encryption device 27, and the judgement device 29 compares the pieces of encrypted solution data to judge whether the pieces of encrypted solution data match. In this case, the encryption device 27 of the authentication device 11 performs encryption of a solution generated by the solution generating section 274, in addition to decryption of encrypted data received from the user device 12 and encryption of transmission-object data held by the authentication device 11.

Further, in the case where the encrypted solution data is sent from the user device 12, the encrypted solution data may be decrypted before the judgement device 29 compares the pieces of encrypted solution data to judge whether the pieces of encrypted solution data match. In this case, the encryption device 27 of the authentication device 11 performs decryption of an encrypted solution received from the user device 12, in addition to decryption of encrypted data received from the user device 12 and encryption of transmission-object data held by the authentication device 11.

Further, the description has been given on the assumption that, in the authentication system 1, collation of pieces of solution data is performed in the authentication device 11 at intervals of a predetermined period of time while transmission and reception of transmission-object data are being performed between the authentication device 11 and the user device 12. The collation of pieces of solution data may be performed at any timing as long as the collation is performed multiple times while the transmission and reception of transmission-object data are being performed.

For example, the collation of pieces of solution data may be performed in the authentication device 11 every time the amount of data sent and received reaches a predetermined amount of data, while transmission and reception of transmission-object data are being performed between the authentication device 11 and the user device 12.

In the authentication system 1, for example, data held in the user device 12 which is generally recorded in the user device 12 can be sent to the authentication device 11 as the transmission-object data.

Data in the user device 12 which has been sent to the authentication device 11 may still remain in the user device 12 or may be deleted from the user device 12.

When the former configuration is employed, the data stored in the user device 12 can also be stored, as a backup copy thereof, in the authentication device 11 which is a device other than the user device 12, while preventing a third person from reading the data stored in the user device 12.

According to the authentication system 1, as described above, even after it is judged by the authentication device 11 that the user device 12 is valid, the validity of the user device is judged multiple times, and thus, the level of communication security during transmission and reception of transmission-object data is very high. Accordingly, when the authentication system 1 is used, the user device 12 can make a backup copy of data of the user device 12 while keeping the same security level as when the data is stored in the user device 12.

On the other hand, when the latter configuration is employed, data which is stored in the user device 12 and is only used in an emergency or data (for example, a will) which is stored in the user device 12 but is not desired to be disclosed to other people or people other than a particular person can be transferred to the authentication device 11 without being left in the user device 12. In other words, the authentication device 11 can be used as a safe-deposit box in the network.

Specifically, in order to make it possible that data in the user device 12 which has been sent to the authentication device 11 can only be read by the user himself/herself of the user device 12, the following processing or the like may be performed: the data stored in the user device 12 is encrypted by using a solution generated by the solution generating section 274 of the encryption device 27, which is unique to each user device 12, and encrypted data is sent to the authentication device 11; and the user device 12 stores the order of the solution used to encrypt the data among the solutions generated by the solution generating section 274. Thus, because the encrypted data sent to the authentication device 1 can be decrypted only by the user device 12 having the encryption device 27 which has been used to encrypt the data, only the user of the user device 12 can read the data while the others cannot decrypt the encrypted data.

Further, in order to make it possible that data in the user device 12 which has been sent to the authentication device 11 can also be read by a particular person in addition to the user of the user device 12, it is only necessary to give a removable encryption device which generates the same solution as the solution used to encrypt the data to the particular person in advance. Thus, because the encrypted data sent to the authentication device 1 can be decrypted only by the user of the user device 12 having the encryption device 27 which has been used to encrypt the data or by the particular person having the encryption device which generates the solution used to encrypt the data, only the user of the user device 12 and the particular person can read the data while the others cannot decrypt the encrypted data.

Further, in order to make it possible that, among pieces of data in the user device 12, which have been sent to the authentication device 11, a given piece of data can be read by the user of the user device 12 and a first person and another given piece of data can be read by the user of the user device 12 and a second person, it is only necessary to give a removable encryption device which generates the same solution as the solution used to encrypt the given piece of data to the first person in advance, and to give a removable encryption device which generates the same solution as the solution used to encrypt the other given piece of data to the second person in advance. Accordingly, among pieces of encrypted data which have been sent to the authentication device 1, encrypted data obtained from the given piece of data can be decrypted only by the user of the user device 12 having the encryption device 27 which has been used to encrypt the data or by the first person having the encryption device which generates the solution used to encrypt the given piece of data. Similarly, among pieces of encrypted data which have been sent to the authentication device 1, encrypted data obtained from the other given piece of data can be decrypted only by the user of the user device 12 having the encryption device 27 which has been used to encrypt the data or by the second person having the encryption device which generates the solution used to encrypt the other given piece of data. Therefore, the encrypted data obtained from the given piece of data cannot be decrypted by persons including the second person other than the user of the user device 12 and the first person. The encrypted data obtained from the other given piece of data cannot be decrypted by persons including the first person other than the user of the user device 12 and the second person. It can be made possible for the user to specify, for each piece of data, a person who can read the data.

(Modification 1)

In the authentication system 1, the validity of the user device 12 is judged by collating solution data generated in the user device 12 with solution data generated in the authentication device 11 to judge whether those pieces of solution data match. However, when the authentication device 11 and the user device 12 have identical common data (for example, ID data, a password unique to each of the user device 12, or the like), the validity of the user device 12 may be judged by using the common data instead of using solution data.

In other words, the validity of the user device 12 may be judged by sending encrypted common data which is obtained when common data held by the user device 12 is encrypted by the encryption device, instead of sending solution data from the user device 12 to the authentication device 11, and collating, in the authentication device 11, data obtained by decrypting the encrypted common data with common data held by the authentication device 11 to judge whether those pieces of common data match. Further, the validity of the user device 12 may be judged in the authentication device 11 by collating the encrypted common data received from the user device 12 with encrypted common data which is obtained when the encryption device encrypts in advance common data held by the authentication device 11 to judge whether those pieces of encrypted common data match.

Note that an algorithm and a key to be used for encryption performed in the user device 12 (and for decryption performed in the authentication device 11) are not fixed but are sequentially generated anew by using solutions to be sequentially generated in the user device 12 and the authentication device 11.

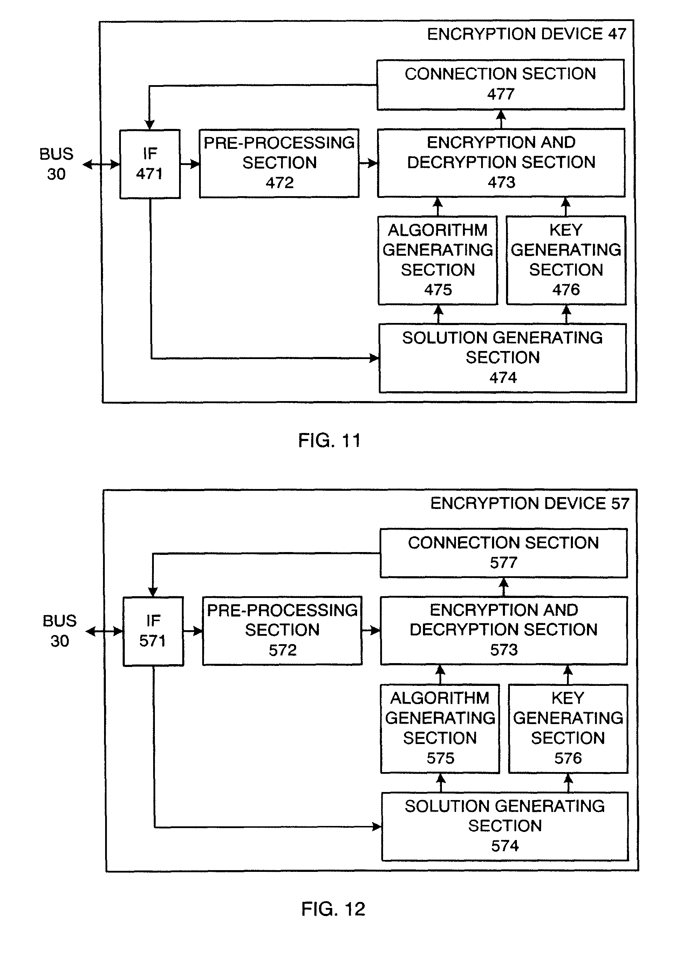

FIG. 11 shows an encryption device 47 used in the user device 12 according to Modification 1.

As shown in this figure, the encryption device 47 includes an interface section 471, a pre-processing section 472 , an encryption and decryption section 473, a solution generating section 474, a connection section 477, an algorithm generating section 475, and a key generating section 476.

The algorithm generating section 475 generates an algorithm based on a solution received from the solution generating section 474. The algorithm is used when the encryption and decryption section 473 performs encryption processing and decryption processing.

The key generating section 476 generates a key based on the solution received from the solution generating section 474. The key is used when the encryption and decryption section 473 performs encryption processing and decryption processing. The keys generated by the key generating section 476 of the user device 12 are identical to the keys generated, in the same order as in the key generating section 476, by a key generating section 576 of the authentication device 11.

Note that an encryption device 57 used in the authentication device 11 in Modification 1 has the same configuration as the encryption device 47. As shown in FIG. 12, the encryption device 57 includes an interface section 571, a pre-processing section 572, an encryption and decryption section 573, a solution generating section 574, an algorithm generating section 575, the key generating section 576, and a connection section 577, which correspond to the interface section 471, the pre-processing section 472, the encryption and decryption section 473, the solution generating section474, thealgorithmgeneratingsection475, thekeygenerating section 476, and the connection section 477 of the encryption device 47, respectively.

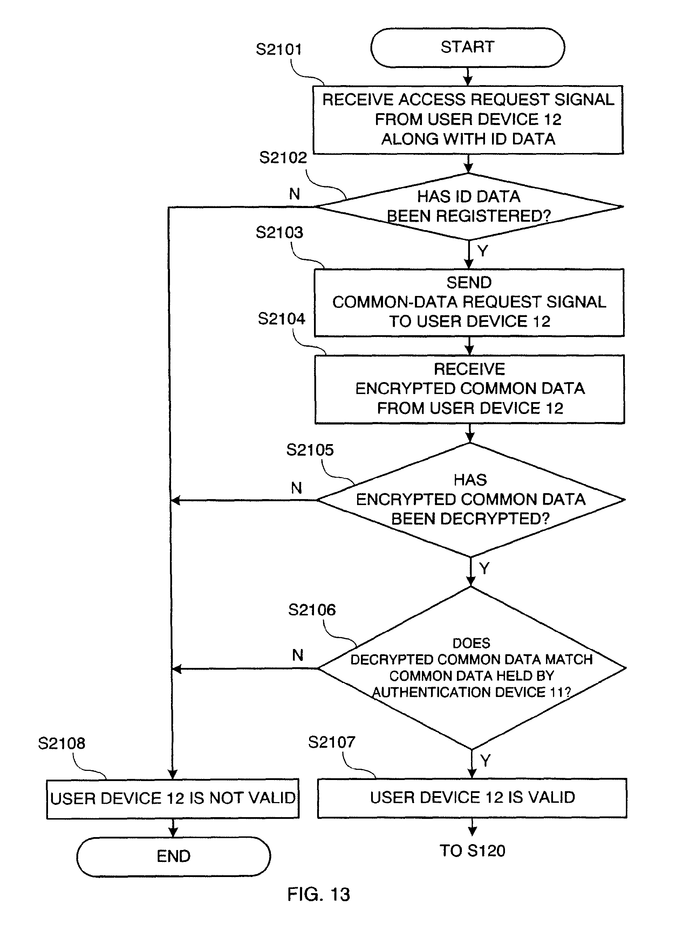

Hereinafter, the process of S110, in which the authentication device 11 judges whether the user device 12 which has accessed the authentication device 11 is valid, will be described in detail with reference to FIG. 13.

When the authentication device 11 is accessed by the user device 12 (S2101), the authentication device 11 judges whether ID data sent from the user device 12 has been registered (S2102) The processes of S2101 and S2102 correspond to the processes of S1101 and S1102 of FIG. 10.

When the ID data sent from the user device 12 has been registered in the authentication device 11 (when ID data that matches the received ID data is included) (Yes in S2102), the authentication device 11 sends a common-data request signal to the user device 12 (S2103).

Specifically, the judgement section 292 of the judgement device 29 generates the common-data request signal for requesting the user device 12 to send common data. The common-data request signal is sent from the interface section 291 to the communication device 28 and the encryption device 57 via the bus 30. The common-data request signal is further sent from the communication device 28 to the user device 12.

When the common-data request signal is received, the user device 12 generates encrypted common data to be sent to the authentication device 11.

Specifically, the common-data request signal is received by the communication device 38 and is sent to the CPU 31 and to the interface section 471 of the encryption device 47 via the bus 39.

When the common-data request signal is received, the interface section 471 of the encryption device 47 sends data indicating that the common-data request signal has been received, to the solution generating section 474. The solution generating section 474 receives the data. Upon reception of the data, the solution generating section 474 starts to generate a solution. How to generate a solution has been described above. Note that, the generated solution is sent to the algorithm generating section 475 and the key generating section 476 and at the same time is stored in the solution generating section 474.

Further, the CPU 31 reads common data. Specifically, the CPU 31 reads the common data from the HDD 33 and temporarily stores the common data, for example, in the RAM 34. The common data is sent from the HDD 33 to the encryption device 47 via the bus 39. In more detail, the common data is sent to the pre-processing section 472 via the interface section 471.

In the pre-processing section 472, the common data is divided in units of the predetermined number of bits to generate plaintext division data items. The plaintext division data items thus generated are sent to the encryption and decryption section 473 in a stream manner, in the order of the generation of the plaintext division data items.

In parallel to the generation of the plaintext division data items, the algorithm generating section 475 generates an algorithm to be used to encrypt the plaintext division data items.

The algorithm generating section 475 according to this embodiment generates an algorithm based on a solution.

In this embodiment, the algorithm generating section 475 generates an algorithm as defined below.

The algorithm used in this embodiment is defined as follows: "a solution matrix "X" of 8 rows by 8 columns to the power of "a" is rotated clockwise by "n x 90°" and then is multiplied by a matrix "Y" of 1 row by 8 columns obtained from an 8-bit plaintext division data item".

Here, in some cases, "a" is assumed to be a predetermined constant. However, in this embodiment, "a" varies according to the solution. In other words, the algorithm used in this embodiment varies according to the solution. For example, "a" can be judged to be a remainder (when the remainder is 0, "a"=1) obtained when a number obtained by adding all numbers of the elements included in a solution matrix of 8 rows by 8 columns is divided by 5.

Further, "n" described above is a number predetermined by a key. When the key is a constant, "n" is fixed. However, as described below, the key varies according to the solution. In other words, "n" also varies according to the solution in this embodiment.

Of course, another algorithm can also be used.

In this embodiment, the algorithm generating section 475 generates an algorithm every time a solution is received from the solution generating section 474, and sends the algorithm to the encryption and decryption section 473.

In parallel to the generation of the plaintext division data items, the key generating section 476 generates a key to be used to encrypt the plaintext division data items.

The key generating section 476 generate a key based on the solution.

In this embodiment, the key generating section 476 generate a key as defined below.

A key used in this embodiment is a number obtained by adding all numbers of the elements included in a solution matrix of 8 rows by 8 columns. Thus, in this embodiment, the key varies based on the solution.

Note that another key can also be used.

In this embodiment, the key generating section 476 generates a key every time a solution is received from the solution generating section 474, and sends the key to the encryption and decryption section 473.

The encryption and decryption section 473 encrypts the plaintext division data items received from the pre-processing section 472, based on the algorithm received from the algorithm generating section 475 and the key received from the key generating section 476.

As described above, the algorithm is defined as follows: "a solution matrix "X" of 8 rows by 8 columns to the power of "a" is rotated clockwise by "n x 90°" and then is multiplied by a matrix "Y" of 1 row by 8 columns obtained from an 8-bit plaintext division data item". Also, "n" serving as the key is the number as described above.

For example, when "a" is 3 and "n" is 6, encryption is performed by multiplying a plaintext division data item by a matrix of 8 rows by 8 columns obtained when the matrix of 8 rows by 8 columns obtained by X cubic is rotated clockwise by 6x90°=540°.

Data items generated through the processing are encrypted division data items.

The encrypted division data items are sent to the connection section 477. The connection section 477 connects the encrypted division data items together to generate one piece of encrypted data. At that time, the order of the encrypted division data items corresponds to the original order of the plaintext division data items.

The encrypted common data generated as described above is sent to the communication device 38 of the user device 12 via the bus 39. The encrypted common data is received by the interface section 381 of the communication device 38, and sent to the communication section 383 after ID data is added to the encrypted common data in the ID data adding section 382. The communication section 383 sends the encrypted common data to the authentication device 11 via the network 13.

The authentication device 11 receives the encrypted common data sent from the user device 12 (S2104).

Specifically, the communication section 282 of the communication device 28 of the authentication device 11 receives the encrypted common data.

The communication section 282 sends the encrypted common data to the interface section 281. The interface section 281 sends the encrypted common data to the encryption device 57 via the bus 30.

The encryption device 57 receives the encrypted common data via the bus 30 and decrypts the encrypted common data (S2105).

Hereinafter, the decryption will be described in detail.

First, the pre-processing section 572 of the encryption device 57 receives the encrypted common data via the interface section 571.

The pre-processing section 572 divides the received encrypted data in units of a predetermined number of bits to generate encrypted division data items.

To generate the encrypted division data items by dividing the encrypted data, the pre-processing section 572 performs the processing reverse to the processing performed in the connection section 477 of the user device 12. Specifically, the encrypted data is divided into multiple encrypted division data items in units of 8 bits from the top.

Next, the encrypted division data items are sent to the encryption and decryption section 573 and decrypted to generate plaintext division data items.

The decryption is performed as the processing reverse to that performed in the encryption and decryption section 473 of the user device 12. For this reason, the authentication device 11 requires the algorithm and key which have been required for the encryption performed in the user device 12.

The algorithm and key to be used for the decryption are generated in the encryption device 57. This generation mechanism will be described below.

Information indicating that the interface section 571 of the encryption device 57 has received the encrypted common data is sent to the solution generating section 574. The solution generating section 574 generates a solution every time this information is received.

The solution generating section 574 of the encryption device 57 of the authentication device 11 generates a solution through the same processing which has been performed in the solution generating section 474 of the user device 12. Note that, as described above, the solution generating section 574 has a solution generation algorithm and the same initial matrices as those associated with the ID data of the user device 12 and held by the solution generating section 474 of the user device 12. Therefore, a solution generated in the authentication device 11 is identical to the solution generated in the same order in the encryption device 47 of the user device 12 while transmission and reception of data are being performed. The generated solution is sent from the solution generating section 574 to the pre-processing section 572, the algorithm generating section 575, and the key generating section 576.

Every time a solution is received, the algorithm generating section 575 generates an algorithm based on the received solution. The algorithm generation process performed by the algorithm generating section 575 of the authentication device 11 is the same as the algorithm generation process performed by the algorithm generating section 475 of the user device 12. The generated algorithm is sent from the algorithm generating section 575 to the encryption and decryption section 573.

Meanwhile, every time a solution is received, the key generating section 476 generates a key based on the received solution. The key generation process performed by the key generating section 576 of the authentication device 11 is the same as the key generation process performed by the key generating section 576 of the user device 12 . The generated key is sent from the key generating section 576 to the encryption and decryption section 573.

In this authentication system, every time encryption is performed in the user device 12, a new solution is generated in the user device 12, and every time decryption of encrypted data generated in the user device 12 is performed in the authentication device 11, a new solution is generated in the authentication device 11. Further, as described above, a solution generated in the encryption device 57 of the authentication device 11 is identical to the solution generated in the same order in the encryption device 47 of the corresponding user device 12. Therefore, a solution generated when common data is encrypted in the user device 12 and an algorithm and a key which are generated based on the solution are always identical to a solution generated in the encryption device 57 of the authentication device 11 and an algorithm and a key which are generated based on the solution, during decryption applied to the encrypted common data generated using the algorithm and key generated based on the solution in the user device 12.

The encryption and decryption section 573 performs decryption processing by using the algorithm received from the algorithm generating section 575, as described above. More specifically, based on the algorithm (in which "a solution matrix "X" of 8 rows by 8 columns to the power of "a" is rotated clockwise by "n x 90°" and then is multiplied by a matrix "Y" of 1 row by 8 columns obtained from an 8-bit plaintext division data item to generate an encrypted division data item") received from the algorithm generating section 575, the encryption and decryption section 573 generates an algorithm for decryption processing, (in which "a solution matrix "X" of 8 rows by 8 columns to the power of "a" is rotated clockwise by "n x 90°" and then is multiplied by "Y" to generate a plaintext division data item, when an encrypted division data item is regarded as a matrix "Z" of 1 row by 8 columns"), and performs the calculation according to the above-mentioned definition by us ing the key, thereby performing the decryption processing. Through this processing, the encryption and decryption section 573 sequentially decrypts the encrypted division data items received in a stream manner from the pre-processing section 572, to generate plaintext division data items.

The plaintext division data items thus generated are sent to the connection section 577. The connection section 577 connects the received plaintext division data items together to obtain the original common data used before the encryption was applied in the user device 12.

Note that, when the decryption cannot be performed (No in S2105), it is judged that the user device 12 is not valid (S2108) .

On the other hand, when the decryption can be performed (Yes in S2105), the decrypted common data is sent from the interface section 571 of the encryption device 57 to the judgement section 292 of the judgement device 29 via the bus 30. Further, common data held by the authentication device 11 is read by the CPU 21 from the HDD 23 and sent to the judgement section 292 of the judgement device 29 via the bus 30.

The judgement section 292 collates the common data which has been received from the user device 12 and to which the decryption has been applied, with the common data held by the authentication device 11 to judge whether they match (S2106).

When the common data which has been received from the user device 12 and to which the decryption has been applied matches the common data held by the authentication device 11 (Yes in S2106), the judgement section 292 judges that the user device 12 is valid (S2107).

On the other hand, when the common data which has been received from the user device 12 and to which the decryption has been applied does not match the common data held by the authentication device 11 (No in S2106), the judgement section 292 judges that the user device 12 is not valid (S2108).

As described above, the validity of the user device 12 which has accessed the authentication device 11 is judged by the authentication device 11.

In Modification 1, it is assumed that transmission and reception of transmission-object data are not performed while solution data is being sent from the user device 12 to the authentication device 11 (in other words, transmission and reception of transmission-object data and transmission and reception of solution data are performed alternately in a time-division manner). However, the data transmission and reception method is not limited to this. Data transmission and reception may be performed in parallel to transmission and reception of encrypted common data.

Note that a modification which can be applied to the above-mentioned embodiment can also be applied to Modification 1.

(Modification 2)

In the authentication system 1 of this embodiment, each user device 12 has the encryption device 37 unique to each of the user device 12. However, each user device may have, in addition to the encryption device unique to each of the user device, an encryption device common to multiple user devices connected to the authentication device.

Modification 2 including such a user device will be described in detail below.

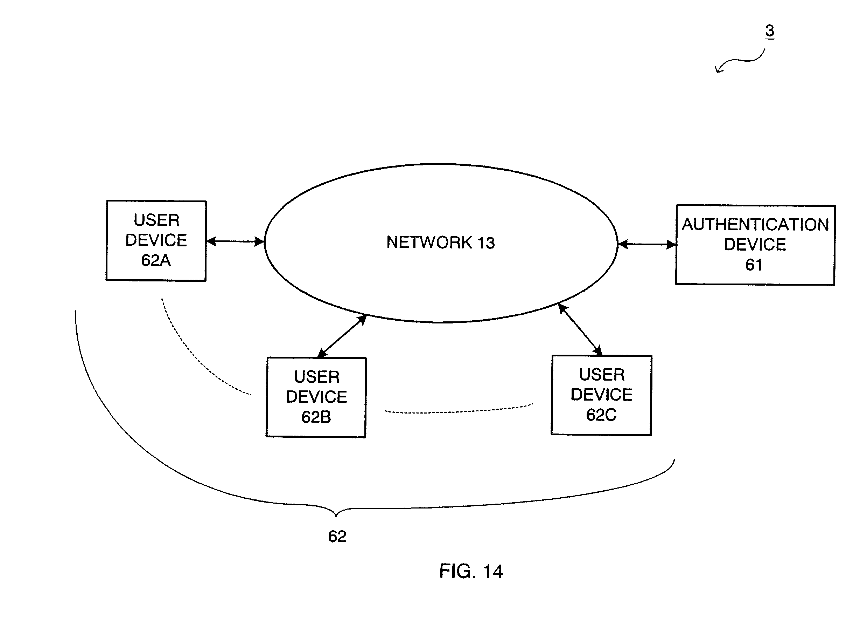

FIG. 14 is a schematic diagram showing an entire configuration of an authentication system 3 according to Modification 2.

As shown in FIG. 14, the authentication system 3 includes "n" user devices 62 which include user devices 62A, 62B, and 62C, and an authentication device 61.

Hereinafter, a configuration of each of the user devices 62 and a configuration of the authentication device 61 will be described. First, a description is given of the configuration of the user device 62.

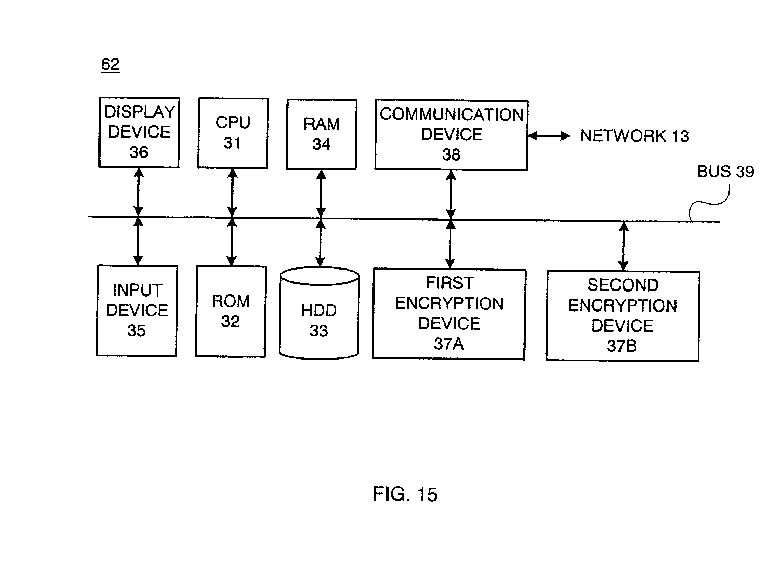

FIG. 15 shows a hardware configuration of the user device 62.

The hardware configuration of the user device 62 is basically the same as that of the user device 12. However, the user device 62 is different from the user device 12 in that, while the user device 12 has one encryption device 37, the user device 62 has, instead of the encryption device 37, two kinds of encryption devices, i.e. , a first encryption device 37A and a second encryption device 37B.

The first encryption device 37A is different for each user device, such as the encryption device 37 of the user device 12.

The second encryption device 37B is an encryption device common to the multiple user devices 62 (in this Modification, the "n" user devices 62).

In this embodiment, processings of encryption and decryption of the first encryption device 37A are performed using a given algorithm and a given key which are unique to the first encryption device 37A of the user device 62.

In this embodiment, processings of encryption and decryption of the second encryption device 37B are performed using a given algorithm and a given key which are unique to and common to the second encryption devices 37B of the user devices 62.

Note that, in the user device 62, the CPU 31, the ROM 32, the HDD 33, the RAM 34, the input device 35, the display device 36, the communication device 38, and the bus 39 are identical to those of the user device 12, respectively.

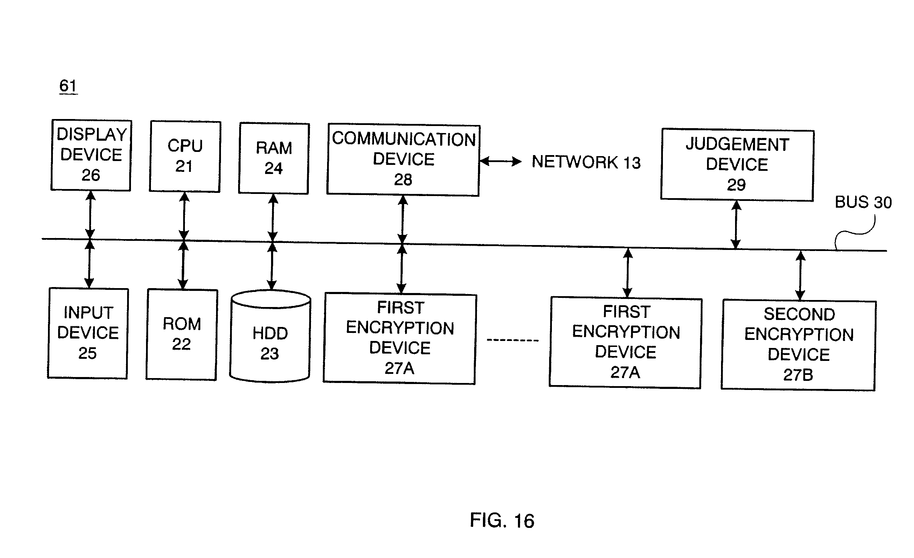

FIG. 16 shows a hardware configuration of the authentication device 61.

The hardware configuration of the authentication device 61 is different from that of the authentication device 11 in that, while the authentication device 11 has one encryption device 27, the authentication device 61 has, instead of the encryption device 27, two kinds of encryption devices, i . e . , first encryption devices 27A and a second encryption device 27B.

The same number of first encryption devices 27A are provided as that of the user devices 62, and each first encryption device 27A sequentially generates a solution identical to that generated by the first encryption device 37A of the corresponding user device 62, in the same order.

The second encryption device 27B sequentially generates a solution identical to that generated by the second encryption device 37B of the user device 62, in the same order.

Note that, in the authentication device 61, the CPU 21, the ROM 22, the HDD 23, the RAM 24, the input device 25, the display device 26, the communication device 28, the judgement device 29, and the bus 30 are identical to those included in the authentication device 61, respectively.

A flow of processing performed in the authentication system 3, which includes the user devices 62 each of which includes the second encryption device 37B, and the authentication device 61 which includes the second encryption device 27B corresponding to the second encryption device 37B, is identical to the flow of processing performed in the authentication system 1.

According to the authentication system 3, which includes the user devices 62 and the authentication device 61, the multiple user devices 62 having the same second encryption devices 37B can also access the same data, thereby improving the convenience.

Note that, it is assumed that processings of encryption and decryption of the encryption devices of the user device 62 and the authentication device 61 according to Modification 2 are performed by using a given algorithm and a given key which are unique. The algorithm and the key are not limited to those used above. The algorithm and the key may be sequentially generated anew at a predetermined timing by using solutions sequentially generated in the first encryption device 37A or the second encryption device 37B of the user device 62 and the first encryption device 27A corresponding to the first encryption device 37A or the second encryption device27B corresponding to the second encryption device 37B, of the authentication device 61.

To generate a solution in the first encryption device 37A, environmental information unique to each user device 62 may be used, as in the above-mentioned embodiment. The environmental information unique to each user device 62 is hardly obtained by devices other than the user device 62 and the authentication device 61 in which the environmental information has been registered. The environmental information cannot be obtained from the outside. Thus, it is possible to prevent a third person who does not know the environmental information unique to each of the user device 62 from masquerading as the user, and to further improve the level of communication security.

Further, to generate a solution in the second encryption device 27B, environmental information unique to the authentication device 61 may be used. Specifically, environmental information of the authentication device 61 is registered in advance in the second encryption device 27B of the authentication device 61 and the second encryption device 37B of each user device 62, and the registered environmental information is used to generate a solution.

The environmental information unique to the authentication device 61 is hardly obtained by devices other than the authentication device 61 and the user device 62 in which the environmental information has been registered. The environmental information cannot be obtained from the outside. Thus, it is possible to prevent a third person who does not know the environmental information unique to the authentication device 61 from masquerading as the user, and to further improve the level of communication security. Further, when the environmental information unique to the authentication device 61 is used, there is a possibility that the user device 62 can be prevented from accessing a fake authentication device, such as the authentication device 61 of a malicious third person who fakes address information of the authentication device 61.

Note that, the environmental information unique to the authentication device 61 can be information of a peripheral device connected to the authentication device 61, for example. Examples of the information of a peripheral device connected to the authentication device 61 include the address information or the MAC address information of a router allocated to the authentication device 61, information on the type or the serial number of a printer connected to the authentication device 61, information of a server connected to the authentication device 61, and information of a mouse connected to the authentication device 61.

Further, the environmental information unique to the authentication device 61 may also be information in the authentication device 61. Examples of the information of inside of the authentication device 61 include folder name information of a folder containing particular data or a predetermined folder, included in the authentication device 61, file name information of a predetermined file, and address information, hierarchical information, and byte-count information of the folder or file.

## Claims

1. An authentication system, comprising:

   a user device; and
   an authentication device for judging whether the user device is valid, wherein:

   the user device comprises:

   user solution generating means for sequentially generating a solution that is a pseudorandom number;
   solution transmission means for sending the solution generated by the user solution generatingmeans to the authentication device; and
   transmission and reception means for performing transmission and reception of transmission-object data with the authentication device when the authentication device judges that the user device is valid;

   the user solution generating means generates the solution by using environmental information unique to each of the user device;
   the authentication device comprises:

   authentication solution generating means for sequentially generating a solution identical to the solution generated in the user device, in the same order as in the user device;
   judgement means for judging whether a user device is valid by using a solution received from the user device and the solution generated by the authentication solution generating means; and
   transmission and reception means for performing transmission and reception of transmission-object data with the user device when the judgement means judges that the user device is valid;

   the authentication solution generating means generates the solution by using environmental information unique to each of the user device and registered in advance in the authentication device; and
   the judgement means performs the judgement multiple times by using solutions sequentially generated, while the transmission and reception of the transmission-object data are being performed with the user device.

2. An authentication system, comprising:

   at least two user devices; and
   an authentication device for judging whether each of the user devices is valid, wherein:

   each of the user devices comprises:

   a first user solution generating means and a second user solution generating means each for sequentially generating a solution that is a pseudorandom number;

solution transmission means for sending the solution generated by the first user solution generating means or the second user solution generating means to the authentication device; and

transmission and reception means for performing transmission and reception of transmission-object data with the authentication device when the authentication device judges that the user device is valid;

the first user solution generating means is unique to each of the user devices and generates the solution by using environmental information unique to each of the user device;

the second user solution generating means is common to predetermined user devices and generates the solution by using environmental information common to the predetermined user devices;

the authentication device comprises:

a number of first authentication solution generating means, the number being the same as that of the user devices, each for sequentially generating a solution identical to the solution generated by the first user solution generating means of a corresponding user device, in the same order as in the first user solution generating means;

a second authentication solution generating means for sequentially generating a solution identical to the solution generated by the second user solution generating means of the user device, in the same order as in the second user solution generating means;

a first judgement means for judging whether a user device is valid by using a solution generated by the first user solution generating means of the user device and received from the user device and the solution generated by the first authentication solution generating means corresponding to the user device;

a second judgement means for judging whether a user device is valid by using a solution generated by the second user solution generating means of the user device and received from the user device and the solution generated by the second authentication solution generating means; and

transmission and reception means for performing transmission and reception of transmission-object data with the user device when the first judgement means or the second judgement means judges that the user device is valid;

each of the first authentication solution generating means generates the solution by using environmental information unique to each of the user device and registered in advance in the authentication device; and

the first judgement means or the second judgement means performs the judgement multiple times by using solutions sequentially generated, while the transmission and reception of the transmission-object data are being performed with the user device.

3. An authentication system according to claim 2, wherein the second user solution generating means and the second authentication solution generating means generate solutions by using environmental information unique to the authentication device.

4. An authentication device which receives, from a user device, a solution that is a pseudorandom number sequentially generated in the user device by using environmental information unique to each of the user device and judges whether the user device is valid by using the received solution, comprising:

solution generating means for sequentially generating a solution identical to the solution generated in the user device, in the same order as in the user device;

judgement means for judging whether a user device is valid by using a solution received from the user device and the solution generated by the solution generating means; and

transmission and reception means for performing transmission and reception of transmission-object data with the user device when the judgement means judges that the user device is valid, wherein:

the solution generating means generates the solution by using the environmental information unique to each of the user device and registered in advance in the authentication device; and

the judgement means performs the judgement multiple times by using solutions sequentially generated, while the transmission and reception of the transmission-object data are being performed with the user device.

5. An authentication device according to claim 4, wherein the environmental information unique to each of the user device is information of a peripheral device connected to the user device.

**6.** An authentication device according to claim 4, wherein the environmental information unique to each of the user device is information of inside of the user device.

**7.** An authentication device according to claim 4, wherein:

the solution generated in the user device is encrypted by using a predetermined algorithm and a predetermined key and then sent to the authentication device;
the authentication device further comprises solution encrypting means for encrypting the solution generated by the solution generating means, by using the predetermined algorithm and the predetermined key; and
the judgement means collates the encrypted solution received from the user device with the solution encrypted by the solution encrypting means, and judges, when the solutions match, that the user device is valid.

**8.** An authentication device according to any one of claims 4 to 7, wherein:

the solution generated in the user device is encrypted by using a predetermined algorithm and a predetermined key and then sent to the authentication device;
the authentication device further comprises solution decrypting means for decrypting the encrypted solution received from the user device, by using the predetermined algorithm and the predetermined key used when the solution was encrypted in the user device; and
the judgement means collates the solution decrypted by the solution decryptingmeans with the solution generated by the solution generating means, and judges, when the solutions match, that the user device is valid.

**9.** An authentication device according to any one of claims 4 to 8, further comprising means for establishing two data paths between the authentication device and the user device, wherein:

one of the two data paths is used to perform transmission and reception of the solution to be used to judge validity of the user device; and
the other one of the two data paths is used to perform transmission and reception of the transmission-object data.

**10.** An authentication device according to any one of claims 4 to 8, further comprising means for establishing one data path between the authentication device and the user device,
wherein the one data path is used to perform transmission and reception of the solution to be used to judge validity of the user device and is also used to perform transmission and reception of the transmission-object data.

**11.** An authentication device used in combination with at least two user devices, for judging whether each of the user devices is valid, each of the user devices comprising: a first user solution generating means and a second user solution generating means each for sequentially generating a solution that is a pseudorandom number; solution transmission means for sending the solution generated by the first user solution generating means or the second user solution generating means to the authentication device; and transmission and reception means for performing transmission and reception of transmission-object data with the authentication device when the authentication device judges that the user device is valid, the first user solution generating means being unique to each of the user devices and generating the solution by using environmental information unique to each of the user device, and the second user solution generating means being common to predetermined user devices and generating the solution by using environmental information common to the predetermined user devices, the authentication device comprising:

a number of first authentication solution generating means, the number being the same as that of the user devices, each for sequentially generating a solution identical to the solution generated by the first user solution generating means of a corresponding user device, in the same order as in the first user solution generating means;
a second authentication solution generating means for sequentially generating a solution identical to the solution generated by the second user solution generating means of the user device, in the same order as in the second user solution generating means;
a first judgement means for judging whether a user device is valid by using a solution generated by the first user solution generating means of the user device and received from the user device and the solution generated by the first authentication solution generating means corresponding to the user device;
a second judgement means for judging whether a user device is valid by using a solution generated by the second user solution generating means of the user device and received from the user device and the solution generated by the second authentication solution generating means; and
transmission and reception means for performing transmission and reception of transmission-object data with the user device when the first judgement means or the second judgement means judges that the user device is valid; wherein:

the first authentication solution generating means generates the solution by using environmental information unique to each of the user device and registered in advance in the authentication device; and

the first judgement means or the second judgement means performs the judgement multiple times by using solutions sequentially generated, while the transmission and reception of the transmission-object data are being performed with the user device.

12. An authentication device according to claim 11, wherein the second authentication solution generating means and the second user solution generating means generate solutions by using environmental information unique to the authentication device.

13. An authentication method executed in an authentication device which comprises: means for receiving, from a user device, a solution that is a pseudorandom number sequentially generated in the user device by using environmental information unique to each of the user device; and judgement means for judging whether the user device is valid by using the received solution, the authentication method comprising the steps performed by the authentication device of:

sequentially generating a solution identical to the solution generated in the user device in the same order as in the user device, by using the environmental information unique to each of the user device and registered in advance in the authentication device;
judging whether a user device is valid by using a solution received from the user device and the solution generated in the authentication device; and
performing transmission and reception of transmission-obj ect data with the user device when the user device is judged as valid,
wherein the judgement is performed multiple times by using solutions sequentially generated, while the transmission and reception of the transmission-object data are being performed with the user device.

14. An authentication method executed in an authentication device which comprises: means for receiving, from a user device, a solution that is a pseudorandom number sequentially generated in the user device by using environmental information unique to each of the user device or a solution that is a pseudorandom number sequentially generated in the user device by using environmental information common to predetermined user devices; and judgement means for judging whether the user device is valid by using the received solution, the authentication method comprising the steps performed by the authentication device of:

sequentially generating a solution identical to the solution generated in the user device in the same order as in the user device, by using environmental information unique to each of the user device and registered in advance in the authentication device, when the solution generated by using the environmental information unique to each of the user device is received from the user device;
sequentially generating a solution identical to the solution generated in the user device in the same order as in the user device, by using the environmental information common to the predetermined user devices, when the solution generated by using the environmental information common to the predetermined user devices is received from the user device;
judging whether a user device is valid by using a solution received from the user device and the solution generated in the authentication device; and
performing transmission and reception of transmission-object data with the user device when the user device is judged as valid,
wherein the judgement is performed multiple times by using solutions sequentially generated, while the transmission and reception of the transmission-object data are being performed with the user device.

15. A user device used in combination with an authentication device, the authentication device receiving a solution that is a pseudorandom number sequentially generated in the user device from the user device, judging whether the user device is valid by using the received solution, and comprising: authentication solution generating means for sequentially generating a solution that is a pseudorandom number; judgement means for judging whether a user device is valid by using a solution received from the user device and the solution generated by the authentication solution generating means; and transmission and reception means for performing transmission and reception of transmission-object data with the user device when the judgement means judges that the user device is valid, the judgement means performing the judgement multiple times by using solutions sequentially generated, while the

27

transmission and reception of the transmission-obj ect data are being performed with the user device, the user device comprising:

user solution generating means for sequentially generating a solution identical to the solution generated in the authentication device, in the same order as in the authentication device;
solution transmission means for sending the solution generated by the user solutiongeneratingmeans to the authentication device; and
transmission and reception means for performing the transmission and reception of the transmission-object data with the authentication device when the authentication device judges that the user device is valid,
wherein the user solution generating means generates the solution by using environmental information unique to each of the user device and registered in advance in the authentication device and the user device.

16. A user device according to claim 15, further comprising solution encrypting means for encrypting the solution generated by the user solution generating means by using a predetermined algorithm and a predetermined key, wherein the solution encrypted by the solution encrypting means is sent to the authentication device.

17. A user device used in combination with an authentication device, the authentication device receiving a solution that is a pseudorandom number sequentially generated in the user device from the user device, judging whether the user device is valid by using the received solution, and comprising: a first authentication solution generating means and a second authentication solution generating means each for sequentially generating a solution that is a pseudorandom number; judgement means for judging whether a user device is valid by using a solution received from the user device and the solution generated by the first authentication solution generating means or the second authentication solution generating means; and transmission and reception means for performing transmission and reception of transmission-object data with the user device when the judgement means judges that the user device is valid, the same number of the first authentication solution generating means being provided as that of the user device and generating the solution by using preregistered environmental information unique to the corresponding user device, the second authentication solution generating means generating the solution by using environmental information common to predetermined user devices, and the judgement means performing the judgement multiple times by using solutions sequentially generated, while the transmission and reception of the transmission-obj ect data are being performed with the user device, the user device comprising:

a first user solution generating means unique to each of the user devices, for sequentially generating a solution identical to the solution generated by the corresponding first authentication solution generating means of the authentication device, in the same order as in the first authentication solution generating means;
a second user solution generating means common to predetermined user devices, for sequentially generating a solution identical to the solution generated by the second authentication solution generating means of the authentication device, in the same order as in the second authentication solution generating means;
solution transmission means for sending the solution generated by the first user solution generating means or the second user solution generating means to the authentication device; and
transmission and reception means for performing the transmission and reception of the transmission-object data with the authentication device when the authentication device judges that the user device is valid.

18. A user device according to claim 17, wherein the second user solution generating means and the second authentication solution generating means generate solutions by using environmental information unique to the authentication device.

19. A data processing method executed in a user device used in combination with an authentication device, the authentication device receiving a solution that is a pseudorandom number sequentially generated in the user device from the user device, judging whether the user device is valid by using the received solution, and comprising: authentication solution generating means for sequentially generating a solution that is a pseudorandom number; judgement means for judging whether a user device is valid by using a solution received from the user device and the solution generated by the authentication solution generating means; and transmission and reception means for performing transmission and reception of transmission-object data with the user device when the judgement means judges that the user device is valid, the judgement means performing the judgement multiple times by using solutions sequentially generated, while the transmission and reception of the transmission-obj ect data are being per formed with the user device, the data processing method comprising the steps performed by the user device of:

sequentially generating a solution identical to the solution generated in the authentication device in the same order as in the authentication device, by using environmental information unique to each of the user device and registered in advance in the authentication device and the user device;

sending the generated solution to the authentication device; and

performing the transmission and reception of the transmission-object data with the authentication device when the authentication device judges that the user device is valid.

20. A data processing method executed in a user device used in combination with an authentication device, the authentication device receiving a solution that is a pseudorandom number sequentially generated in the user device from the user device, judging whether the user device is valid by using the received solution, and comprising: a first authentication solution generating means and a second authentication solution generating means each for sequentially generating a solution that is a pseudorandom number; judgement means for judging whether a user device is valid by using a solution received from the user device and the solution generated by the first user solution generating means or the second user solution generating means; and transmission and reception means for performing transmission and reception of transmission-object data with the user device when the judgement means judges that the user device is valid, the same number of the first authentication solution generating means being provided as that of the user device and generating the solution by using preregistered environmentalinformation uniquetothe corresponding user device, the second authentication solution generating means generating the solution by using environmental information common to predetermined user devices, and the judgement means performing the judgement multiple times by using solutions sequentially generated, while the transmission and reception of the transmission-object data are being performed with the user device, the data processing method comprising the steps performed by the user device of:

sequentially generating a solution identical to the solution generated by the first authentication solution generating means or the second authentication solution generating means of the authentication device, in the same order as in the first authentication solution generating means or the second authentication solution generating means of the authentication device, by using environmental information unique to each of the user device and registered in advance in the authentication device and the user device or the environmental information common to the predetermined user devices;

sending the generated solution to the authentication device; and

performing the transmission and reception of the transmission-object data with the authentication device when the authentication device judges that the user device is valid.

USER
DEVICE
12

USER
DEVICE
12

NETWORK 13

AUTHENTICATION
DEVICE
11

USER
DEVICE
12

USER
DEVICE
12

1

30

FIG. 1

FIG. 2

COMMUNICATION DEVICE 28

BUS
30

IF
281

COMMUNICATION
SECTION
282

NETWORK
13

FIG. 3

ENCRYPTION DEVICE 27

CONNECTION
SECTION
275

BUS
30

IF
271

PRE-
PROCESSING
SECTION
272

ENCRYPTION AND
DECRYPTION
SECTION
273

SOLUTION
GENERATING
SECTION
274

FIG. 4

JUDGEMENT DEVICE 29

BUS
30

IF
291

JUDGEMENT
SECTION
292

ID DATA
RECORDING
SECTION
293

FIG. 5

FIG. 6

12

| DISPLAY DEVICE 36 | CPU 31 | RAM 34 | COMMUNICATION DEVICE 38 |

NETWORK 13

BUS 39

| INPUT DEVICE 35 | ROM 32 | HDD 33 | ENCRYPTION DEVICE 37 |

EP 2 117 160 A1

ENCRYPTION DEVICE 37

CONNECTION
SECTION
375

BUS
39

IF
371

PRE-
PROCESSING
SECTION
372

ENCRYPTION AND
DECRYPTION
SECTION
373

SOLUTION
GENERATING
SECTION
374

FIG. 7

COMMUNICATION DEVICE 38

BUS
39

IF
381

ID DATA
ADDING
SECTION
382

COMMUNICATION
SECTION
383

NETWORK
13

FIG. 8

FIG. 9

START

S1101 — RECEIVE ACCESS REQUEST SIGNAL FROM USER DEVICE 12 ALONG WITH ID DATA

S1102 — HAS ID DATA BEEN REGISTERED?

N

S1103 — SEND SOLUTION REQUEST SIGNAL TO USER DEVICE 12

S1104 — GENERATE SOLUTION DATA

S1105 — RECEIVE SOLUTION DATA FROM USER DEVICE 12

S1106 — DOES RECEIVED SOLUTION DATA MATCH SOLUTION DATA GENERATED IN AUTHENTICATION DEVICE 11?

N

Y

S1108 — USER DEVICE 12 IS NOT VALID

S1107 — USER DEVICE 12 IS VALID

END

TO S120

FIG. 10

ENCRYPTION DEVICE 47

CONNECTION SECTION
477

BUS
30

IF
471

PRE-PROCESSING
SECTION
472

ENCRYPTION AND
DECRYPTION SECTION
473

ALGORITHM
GENERATING
SECTION
475

KEY
GENERATING
SECTION
476

SOLUTION GENERATING
SECTION
474

FIG. 11

ENCRYPTION DEVICE 57

CONNECTION SECTION
577

BUS
30

IF
571

PRE-PROCESSING
SECTION
572

ENCRYPTION AND
DECRYPTION SECTION
573

ALGORITHM
GENERATING
SECTION
575

KEY
GENERATING
SECTION
576

SOLUTION GENERATING
SECTION
574

FIG. 12

S2101

START

RECEIVE ACCESS REQUEST SIGNAL
FROM USER DEVICE 12
ALONG WITH ID DATA

S2102

N ← HAS ID DATA
BEEN REGISTERED?

Y

S2103

SEND
COMMON-DATA REQUEST SIGNAL
TO USER DEVICE 12

S2104

RECEIVE
ENCRYPTED COMMON DATA
FROM USER DEVICE 12

S2105

N ← HAS
ENCRYPTED COMMON DATA
BEEN DECRYPTED?

Y

S2106

N ← DOES
DECRYPTED COMMON DATA MATCH
COMMON DATA HELD BY
AUTHENTICATION DEVICE 11?

Y

S2108

USER DEVICE 12 IS NOT VALID

S2107

USER DEVICE 12 IS VALID

END

TO S120

FIG. 13

FIG. 14

62

| | | | | |
|---|---|---|---|---|
| DISPLAY DEVICE 36 | CPU 31 | RAM 34 | COMMUNICATION DEVICE 38 | → NETWORK 13 |

BUS 39

| | | | | |
|---|---|---|---|---|
| INPUT DEVICE 35 | ROM 32 | HDD 33 | FIRST ENCRYPTION DEVICE 37A | SECOND ENCRYPTION DEVICE 37B |

FIG. 15

61

FIG. 16

## INTERNATIONAL SEARCH REPORT

| | International application No. |
|---|---|
| | PCT/JP2007/075370 |

A.  CLASSIFICATION OF SUBJECT MATTER
*H04L9/32*(2006.01)i

According to International Patent Classification (IPC) or to both national classification and IPC

B.  FIELDS SEARCHED

Minimum documentation searched (classification system followed by classification symbols)
H04L9/32

Documentation searched other than minimum documentation to the extent that such documents are included in the fields searched
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X | JP 11-272613 A  (Hitachi Information Systems, Inc.), 08 October, 1999 (08.10.99), Full text; all drawings (Family: none) | 1-20 |

| ☐ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25 February, 2008 (25.02.08) | 04 March, 2008 (04.03.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006253746 A
- JP 2006253745 A